(19) Europäisches Patentamt
European Patent Office
Office européen des brevets

(11) EP 3 541 986 B1

# (12) EUROPÄISCHE PATENTSCHRIFT

(45) Veröffentlichungstag und Bekanntmachung des Hinweises auf die Patenterteilung:
**17.06.2020 Patentblatt 2020/25**

(21) Anmeldenummer: **16797547.3**

(22) Anmeldetag: **16.11.2016**

(51) Int Cl.:
***D06M 15/643*** *(2006.01)* ***C09D 183/06*** *(2006.01)*

(86) Internationale Anmeldenummer:
**PCT/EP2016/077840**

(87) Internationale Veröffentlichungsnummer:
**WO 2018/091077 (24.05.2018 Gazette 2018/21)**

## (54) ZUSAMMENSETZUNG ENTHALTEND BETA-KETOCARBONYL-FUNKTIONELLE ORGANOSILICIUMVERBINDUNGEN

COMPOSITIONS CONTAINING BETA-KETOCARBONYL-FUNCTIONAL ORGANOSILICON COMPOUNDS

COMPOSITION CONTENANT DES COMPOSÉS ORGANOSILICIÉS À FONCTION BÊTA-CÉTOCARBONYLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.09.2019 Patentblatt 2019/39**

(73) Patentinhaber: **Wacker Chemie AG**
**81737 München (DE)**

(72) Erfinder:
- **HELLER, Anton**
  **84359 Simbach (DE)**
- **BREHM, Christof**
  **84489 Burghausen (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**US-A- 6 121 404**
**US-A1- 2009 144 912**
**US-A1- 2009 197 081**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 541 986 B1

## Beschreibung

Die Erfindung betrifft Zusammensetzungen enthaltend β-Ketocarbonyl-funktionelle Organosiliciumverbindungen sowie deren Verwendung zur Ausrüstung oder Imprägnierung von faserigen Substraten, insbesondere zur Hydrophobierung von faserigen Substraten, wobei die faserigen Substrate bevorzugt Textilien sind.

Es ist seit langem bekannt, dass Silicone auf festen Oberflächen wasserabweisende Eigenschaften erzeugen können.

Walter Noll beschreibt in seinem Buch "Chemistry and Technology of Silicones", in Kapitel 9.1.6, Seiten 447-452 (1968) die besonders ausgeprägten hydrophoben Eigenschaften der Si-H-haltigen Siliconöle. Dementsprechend wurden bisher zur Hydrophobierung von flexiblen Substraten wie Fasern oder deren Verbund zu Garnen und Textilien die wirksamsten Siliconprodukte auf Basis der Si-H-haltigen Siliconöle entwickelt.

US 2,854,424 A beschreibt eine wässrige Emulsionszusammensetzung, die Methylhydrogenpolysiloxan, ein Hydrolysat aus 5% Trimethylchlorsilan, 20% Methyltrichlorsilan, 70% Dimethyldichlorsilan, und 4 bis 8% einer Mischung aus Trichlortrimethyldisilan und Tetrachlordimethyldisilan, sowie eine Zinnverbindung enthält, und die aufgetragen auf Textilien Anfangs-Spraywerte von 100 und nach mindestens 6 Trockenreinigungsgängen Spraywerte von mindestens 80 nach AATCC Standardmethode 22-1952 erzeugen soll.

In seinem Buch "Chemistry & Technology of Fabric Preparation & Finishing" erläutert Charles Tomasino in Kapitel 9, Seiten 154-171 (1992), dass Ausrüstungen mit Si-H-haltigen Polysiloxanen in Kombination mit Knitterfreiausrüstungsmittel permanenter würden. Um die nach der Hydrolyse und Kondensation der Si-H-haltigen Polysiloxane auf den Fasern entstandenen spröden Überzüge weicher zu machen, werden Si-H-haltige Polysiloxane mit Polydimethylsiloxanen abgemischt. Auch hier werden Zinnkatalysatoren zur Vernetzung empfohlen.

Die meisten wirksamen Zinnorganyle werden heute als toxisch eingestuft und somit von den Textilveredlern abgelehnt. Auch Si-H-haltige Polysiloxane finden nur noch beschränkte Akzeptanz, da sie vor allem in wässrigen Formulierungen zur Abspaltung von Wasserstoffgas tendieren.

Bei der Suche nach Alternativen wird in GB884141A in Beispiel 1 ein Verfahren zur Herstellung von Emulsionen aus Polydimethylsiloxan und Butyltitanat beschrieben. Das Siliconöl und Butyltitanat wird dabei in Testbenzin vorgelöst und dann zu einer wässrigen Emulsion weiterverarbeitet. Auf mit dieser Emulsion ausgerüsteten Zelluloseacetat-Stoffen würden Spraywerte von 100 erreicht. Nachteilig ist bei diesen Formulierungen jedoch deren sehr begrenzte Lagerfähigkeit.

In der Folge werden vermehrt organofunktionelle Silicone für den Einsatz zur Faserhydrophobierung verwendet.

US 2011/0015332 A1 offenbart Emulsionen aus Aminopolyorganosiloxanen und Tensid mit einer Menge von maximal 2,5% bezüglich der Aktivsubstanz, wobei kein Protonierungsmittel eingesetzt wird.

WO 2014/184097 A1 beschreibt in seinen Beispielen Kombinationen von aminofunktionellen Siliconpolymeren mit Wachs und / oder Fettsäureestern. In allen Beispielen wird in der Anwendung ein Aminoplast, Harnstoffderivat oder Melaminderivat als Fixierhilfsmittel zugesetzt.

In den Beispielen von WO 2016/042085 A1 werden Zusammensetzungen aus Aminopolysiloxanen und Metallalkoxid in organischen Lösemitteln beschrieben, mit denen sich auf Baumwolltextilien sowohl wasser- als auch ölabweisende Eigenschaften erzeugen ließen.

In WO 2016/026737 A1 werden Öl-in-Wasser-Emulsionen aus Polydimethylsiloxan mit Aminoalkylgruppen, Protonierungsmittel und einer Silicatverbindung offenbart, die im Vergleich zu einem gleichgearteten Produkt, das jedoch anstelle der Silicatverbindung ein MQ-Harz enthält, stärker wasserabweisend wirken soll.

Das Anforderungsprofil an siliconhaltige Hydrophobierungsmittel für den Einsatz in der industriellen Erstausrüstung beinhaltet neben einer hervorragenden Wasserabweisung eine gute Lagerfähigkeit, möglichst einfache und sichere Handhabung, sowie einen angenehmen Weichgriff. Produkte aus dem Stand der Technik erfüllen dieses Anforderungsprofil nur bedingt.

Wachsartige β-Ketocarbonyl-funktionelle Silicone werden in US 2011/0024679 A1 beschrieben. In den Beispielen wird gezeigt, wie sie durch eine Reaktion von einem Aminopolysiloxan mit einem Alkylketendimer erzeugt werden. Mit den wachsartigen β-Ketocarbonyl-funktionellen Siliconen wird eine "Gelierung" von bevorzugt flüchtigen linearen, verzweigten oder cyclischen Siloxanen erreicht, was insbesondere in der Kosmetik Anwendung findet.

In US 2009/0197081 A1 werden Zusammensetzungen aus β-Ketocarbonyl-funktionellen Siloxanpolymeren und organischen Si-freien Polyaminen offenbart. Fasern, die mit dieser Zusammensetzung imprägniert werden, sollen trotz des hohen Amingehaltes vergleichsweise geringe Vergilbungseigenschaften zeigen. In allen Beispielen erfolgt die Umsetzung mit den genannten Si-freien Polyaminen ausgehend von Siliconpolyetheracetoacetaten.

Aus US 2009/0144912 A1 ist ein Verfahren zur Behandlung von proteinhaltigen Fasern mit Zusammensetzungen auf Basis von β-Ketocarbonyl-funktionellen Siloxanpolymeren bekannt. Die Beispiele zeigen deren Hydrophobierwirkung auf chromgegerbten Leder nach Applikation aus organischen Lösungsmitteln. US-B-6121404 offenbart eine Zusammensetzung enthaltend β-Ketocarbonyl-funktionelle Organosiliciumverbindungen und aminofunktionelle Organosiliciumverbindungen sowie die Behandlung von Textilien mit dieser Zusammensetzung.

Aufgabe der vorliegenden Erfindung war, eine siliconhaltige Zusammensetzung bereitzustellen, die Fasern waschecht, wasserabweisend und weich macht und sicher in der Handhabung ist.
Die Aufgabe wird durch die Erfindung gelöst. Gegenstand der Erfindung sind Zusammensetzungen enthaltend

(1) β-Ketocarbonyl-funktionelle Organosiliciumverbindungen, die mindestens einen Si-gebundenen Rest **A** der allgemeinen Formel

$$(Si)\text{-}L^1\text{-}[X^1\text{-}L^2\text{-}]_yX^2 \qquad (I)$$

enthalten, wobei

- $L^1$ einen zweiwertigen, Si-C-gebundenen Kohlenwasserstoffrest mit 1 bis 18 C-Atomen bedeutet,
- $L^2$ einen zweiwertigen Kohlenwasserstoffrest mit 1 bis 6 C-Atomen bedeutet,
- $X^1$ ein Rest der Formel -NZ-bedeutet,
- $X^2$ ein Rest der Formel -NH-Z bedeutet,
- Z ein Rest der Formel $-C(=O)-CHR^3-C(=O)-CH_2R^3$ bedeutet,
- $R^3$ einen einwertigen, gegebenenfalls substituierten Kohlenwasserstoffrest mit mindestens 12 C-Atomen, vorzugsweise mit mindestens 14 C-Atome bedeutet,
- y 0, 1, 2 oder 3, vorzugsweise 0 oder 1, besonders bevorzugt 0, ist und (Si)- die Bindung zum Si-Atom bedeutet,

(2) aminofunktionelle Organosiliciumverbindung mit mindestens einem Si-gebunden Rest **B** der allgemeinen Formel

$$(Si)\text{-}P^1\text{-}[Y^1\text{-}P^2\text{-}]_zY^2 \qquad (II),$$

wobei

- $P^1$ und $P^2$ dieselbe Bedeutung wie $L^1$ und $L^2$ haben,
- $Y^1$ ein Rest der Formel -NH- oder $-NR^4-$ ist,
- $Y^2$ ein Rest der Formel $NH_2$ oder $NHR^4$ ist,
- $R^4$ dieselbe Bedeutung wie $R^2$ hat,
- z 0, 1, 2 oder 3, vorzugsweise 0 oder 1, besonders bevorzugt 1, ist und (Si)- die Bindung zum Si-Atom bedeutet,

und gegebenenfalls
(3) Organometallverbindungen.

Als β-Ketocarbonyl-funktionelle Organosiliciumverbindungen (1) können Silane, oligomere oder polymere Organosiloxane eingesetzt werden. Sie enthalten vorzugsweise 1 bis 2000 Si-Atome, bevorzugt 2 bis 1000 Si-Atome und besonders bevorzugt 20 bis 700 Si-Atome.
Es kann eine Art von β-Ketocarbonyl-funktioneller Organosiliciumverbindung (1) oder mehrere Arten von β-Ketocarbonyl-funktionellen Organosiliciumverbindungen (1) eingesetzt werden.
Vorzugsweise werden als β-Ketocarbonyl-funktionelle Organosiliciumverbindungen (1) Organopolysiloxane bestehend aus Einheiten der allgemeinen Formel

$$A_aR_b(OR^1)_cSiO_{\frac{4-(a+b+c)}{2}} \qquad (III)$$

eingesetzt, wobei

- A ein Rest der Formel (I) ist,
- R einen einwertigen, gegebenenfalls substituierten Kohlenwasserstoffrest mit 1 bis 18 C-Atomen je Rest bedeutet,
- $R^1$ ein Wasserstoffatom oder einen Alkylrest mit 1 bis 8 C-Atomen bedeutet,
- a 0 oder 1
- b 0, 1, 2 oder 3 und
- c 0 oder 1 ist,

mit der Maßgabe, dass die Summe a+b+c kleiner oder gleich 3 ist und durchschnittlich mindestens ein Rest A je Molekül enthalten ist.

Bevorzugte Beispiele für β-Ketocarbonyl-funktionelle Organosiliciumverbindungen (1) sind Organopolysiloxane der allgemeinen Formel

$$A_gR^*_{3-g}SiO(SiR_2O)_l(SiRAO)_kSiR^*_{3-h}A_h \qquad (IV),$$

wobei

| | |
|---|---|
| A | ein Rest der Formel (I) ist, |
| R* | gleich oder verschieden ist und einen Rest R oder einen Rest der Formel $-OR^1$ bedeutet, wobei |
| R und $R^1$ | die oben dafür angegebene Bedeutung haben, |
| g | 0 oder 1, |
| h | 0 oder 1, |
| l | 0 oder eine ganze Zahl von 1 bis 2000 und |
| k | 0 oder eine ganze Zahl von 1 bis 20 ist, |

mit der Maßgabe, dass durchschnittlich mindestens ein Rest A je Molekül enthalten ist.

Die in der erfindungsgemäßen Zusammensetzung eingesetzten β-Ketocarbonyl-funktionellen Organosiliciumverbindungen (1) können wachsartig fest oder flüssig sein. Im letzteren Fall weisen sie vorzugsweise eine Viskosität von 1 bis 1 000 000 mPa.s bei 25°C, bevorzugt 100 bis 50 000 mPa.s bei 25°C, auf.

Beispiele für Reste R sind Alkylreste, wie der Methyl-,Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m- und p-Tolylreste, Xylylreste und Ethylphenylreste; und Aralkylreste, wie der Benzylrest, der α- und der β-Phenylethylrest. Bevorzugte Beispiele für Reste R sind der Methylrest, der n-Octadecylrest, der n-Octylrest und der Phenylrest.

Beispiele für Reste $R^1$ sind das Wasserstoffatom, oder Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Bevorzugte Beispiele für $R^1$ sind das Wasserstoffatom, der Methylrest und Ethylrest.

Beispiele für Kohlenwasserstoffreste R gelten auch für Kohlenwasserstoffreste $R^2$.

Beim Rest $R^3$ handelt es sich um einen einwertigen, gegebenenfalls substituierten Kohlenwasserstoffrest mit mindestens 12 C-Atomen, vorzugsweise mit mindestens 14 C-Atomen und vorzugsweise höchstens 20 C-Atomen. Bevorzugt ist der Rest $R^3$ ein Kohlenwasserstoffrest mit 14 bis 18 C-Atome, besonders bevorzugt ist der Rest $R^3$ ein $C_{14}$-$C_{18}$-Alkylrest.

Beispiele für Reste $R^3$ sind der Dodecyl-, Tetradecyl-, Hexadecyl- und der Octadecylrest.

Beispiele für $L^1$ sind zweiwertige Kohlenwasserstoffreste wie die Methylengruppe, die 1,2-Ethylengruppe, die 1,3-Propylengruppe, die 1,3-Butylengruppe, die 1,4-Butylengruppe, die 1,5-Pentylengruppe und die 1,6-Hexylengruppe.

Besonders bevorzugte Beispiele sind die 1,3-Propylengruppe und die 1,3-Butylengruppe.

Beispiele für $L^2$ sind zweiwertige Kohlenwasserstoffreste wie die 1,2-Ethylengruppe, die 1,3-Propylengruppe, die 1,3-Butylengruppe, die 1,4-Butylengruppe, die 1,5-Pentylengruppe und die 1,6-Hexylengruppe.

Ein besonders bevorzugtes Beispiel ist die 1,2-Ethylengruppe.

Die Herstellung der β-Ketocarbonyl-funktionellen Organosiliciumverbindungen (1) kann durch chemische Umsetzungen von carbinol-, amino-, oder mercaptanfunktionellen Organosiliciumverbindungen, bevorzugt aminofunktionellen Organosiliciumverbindungen, mit Diketen, 2,2,6-Trimethyl-4H-1,3-dioxin-4-one (Diketen-Aceton-Addukt) oder bevorzugt mit dem nicht leicht entflammbaren und ungiftigen Alkyl-Keten-Dimer (AKD) erfolgen.

β-Ketocarbonyl-funktionelle Organosiliciumverbindungen (1) werden beispielsweise für $R^3$ = H nach den in US 2008/0293907 A1 oder, wenn $R^3$ ein Kohlenwasserstoffrest ist, nach den in US 2011/0024679 A1 beschriebenen Verfahren hergestellt.

Als aminofunktionelle Organosiliciumverbindungen (2) können Silane oder oligomere oder polymere Organosiloxane eingesetzt werden. Sie enthalten vorzugsweise 1 bis 2000 Si-Atome, bevorzugt 2 bis 1000 Si-Atome und besonders bevorzugt 20 bis 700 Si-Atome.

Es kann eine Art von aminofunktioneller Organosiliciumverbindung (2) oder mehrere Arten von aminofunktionellen Organosiliciumverbindungen (2) eingesetzt werden.

Vorzugsweise werden als aminofunktionelle Organosiliciumverbindungen (2) Organopolysiloxane bestehend

aus Einheiten der allgemeinen Formel

$$B_dR'_e(OR^5)_fSiO_{\frac{4-(d+e+f)}{2}} \quad (V)$$

eingesetzt, wobei

B ein Rest der Formel (II) ist,
R' einen einwertigen, gegebenenfalls substituierten Kohlenwasserstoffrest mit 1 bis 18 C-Atomen je Rest bedeutet,
$R^5$ ein Wasserstoffatom oder einen Alkylrest mit 1 bis 8 C-Atomen bedeutet,
d 0 oder 1
e 0, 1, 2 oder 3 und
f 0 oder 1 ist,

mit der Maßgabe, dass die Summe d+e+f kleiner oder gleich 3 ist und durchschnittlich mindestens ein Rest B je Molekül enthalten ist.

Bevorzugte Beispiele für aminofunktionelle Organosiliciumverbindungen (2) sind Organopolysiloxane der allgemeinen Formel

$$B_sR^6_{3-s}SiO(SiR'_2O)_n(SiR'BO)_mSiR^6_{3-t}B_t \quad (VI),$$

wobei

B ein Rest der Formel (II) ist,
$R^6$ gleich oder verschieden ist und einen Rest R' oder einen Rest der allgemeinen Formel $-OR^5$ bedeutet, wobei
R' und $R^5$ die oben dafür angegebene Bedeutung haben,
s 0 oder 1,
t 0 oder 1,
n 0 oder eine ganze Zahl von 1 bis 2000 und
m 0 oder eine ganze Zahl von 1 bis 20 ist,

mit der Maßgabe, dass durchschnittlich mindestens ein Rest B je Molekül enthalten ist.

Die bei den erfindungsgemäßen Zusammensetzungen eingesetzten Organosiliciumverbindungen (2) können wachsartig fest oder flüssig sein. Im letzteren Fall weisen sie vorzugsweise eine Viskosität von 1 bis 1 000 000 mPa.s bei 25°C, bevorzugt 100 bis 50 000 mPa.s bei 25°C, auf.

Als Beispiele für R' gelten dieselben wie für R.
Als Beispiele für $R^5$ gelten dieselben wie für $R^1$.

Aminofunktionelle Organosiliciumverbindungen (2) werden bevorzugt nach den in US 2005/0215806 A1, US 2002/0049296 A1 oder US 2015/0112092 A1 beschriebenen Verfahren hergestellt.

Als Organometallverbindung (3) können Amine, Alkoholate, carbon- oder phosphorsaure Salze oder Chelate von Metallen ausgewählt aus der Gruppe von Pb, Zn, Zr, Sb, Fe, Cd, Sn, Ti, Ba, Ca, Mn, V, Al oder Co eingesetzt werden. Bevorzugt werden Organometallverbindungen des Zn, Zr, Ti, und des Al eingesetzt. Besonders bevorzugt sind Organometallverbindungen des Zr und Ti.
Beispiele für carbonsaure Salze sind Naphtenate, Octoate, Hexoate, Laurate, Acetate, Formiate, Citrate und Lactate.

Beispiele für Organometallverbindungen (3) sind
Zink-, Zinn- und Zirkonoctoat; Aluminiumalkoholate, wie Al-tri-sek.-butanolat, Al-di-sek.-butanolat-mono-acetylacetonat, Al-mono-sek.-butanolat-di-acetylacetonat, Al-di-sek.-butanolat-monoacetessigsäure-ethylester, Al-mono-sek.-butanolat-di-acetessigsäure-ethylester, Al-di-sek.-butanolat-mono-acetat und Al-mono-sek.-butanolat-di-acetat; Alkyltitanate; Alkylzirkonate; Zink-, Zinn-, Zirkon-,Ferri- und Kobalt-Naphthenat; Zink- und Zirkonformiat; Zinn-, Zink- und Zirkonacetat; Dibutylzinndicaprylat, -dilaurat, -diacetat und -maleinat; Dioctylzinndiformiat, -dibenzoat und -dicrotonat; Alkanolamin-Titanate und Zirkonate; Titanphosphate; Titan-acetylacetonate; Ethylcitrat-Zirkonat; und Trialkoxyvanadate, wie Trimethoxyvanadat, Tri-n-butoxyvanadat und Triheptoxyvanadat. Bevorzugt werden Alkoholate und carbonsaure Salze des Titan und Zirkon eingesetzt.
Besonders bevorzugt sind Butyltitanat, Zirkonoctoat und Zirkonacetat.

Es kann eine Art von Organometallverbindung (3) oder mehrere Arten von Organometallverbindungen (3) eingesetzt werden.

In der erfindungsgemäßen Zusammensetzung werden die β-Ketocarbonyl-funktionelle Organosiliciumverbindung (1) und die aminofunktionelle Organosiliciumverbindung (2) in Gewichtsverhältnissen von 1 zu 99 bis 99 zu 1, bevorzugt in Gewichtsverhältnissen von 20 zu 80 bis 80 zu 10, besonders bevorzugt in Gewichtsverhältnissen von 40 zu 60 bis 70 zu 20 eingesetzt.

Werden Organometallverbindungen (3) mitverwendet, werden sie vorzugsweise in Mengen von 0,1 bis 15

Gewichtsteilen, bevorzugt 0,5 bis 8 Gewichtsteilen, jeweils bezogen auf den Metallgehalt der Organometallverbindungen (3), je 100 Gewichtsteilen β-Ketocarbonyl-funktionellen Organosiliciumverbindungen (1) und aminofunktionellen Organosiliciumverbindungen (2), eingesetzt.

In einer Ausführungsform der Erfindung ist die erfindungsgemäße Zusammensetzung in organischen Lösungsmitteln gelöst.

Typische Beispiele für organische Lösungsmittel für die erfindungsgemäße Zusammensetzung sind Kohlenwasserstoffe, wie Pentan, n-Hexan, Hexan-Isomerengemische, Heptan, Octan, Testbenzin, Petrolether, Benzol, Toluol und Xylole; halogenierte Kohlenwasserstoffe, wie Dichlormethan, Trichlormethan, Tetrachlormethan, 1,2-Dichlorethan und Trichlorethylen; Alkohole, wie Methanol, Ethanol, n-Propanol, iso-Propanol, n-Amylalkohol und i-Amylalkohol; Ketone, wie Aceton, Methylethylketon, Diisopropylketon und Methylisobutylketon (MIBK); Ester, wie Ethylacetat, Butylacetat, Propylpropionat, Ethylbutyrat und Ethylisobutyrat; Ether, wie Tetrahydrofuran, Diethylether, Di-isopropylether und Diethylenglycoldimethylether; und Gemische dieser Lösungsmittel.

Wenn organische Lösungsmittel eingesetzt werden, werden sie vorzugsweise in einer Menge von 100 bis 100000 Gewichtsteilen je 100 Gewichtsteile der β-Ketocarbonyl-funktionellen Organosiliciumverbindung (1) und der aminofunktionellen Organosiliciumverbindung (2) eingesetzt.

In einer weiteren bevorzugten Ausführungsform der Erfindung liegen die erfindungsgemäßen Zusammensetzungen in Form wässriger Dispersionen vor, die β-Ketocarbonyl-funktionelle Organosiliciumverbindungen (1) aminofunktionelle Organosiliciumverbindungen (2), gegebenenfalls Organometallverbindungen (3), Emulgatoren (4) und Wasser (5) enthalten.

Emulgatoren (4) werden in Mengen von vorzugsweise 1 bis 60 Gewichtsteilen, bevorzugt 2 bis 30 Gewichtsteilen, jeweils bezogen auf 100 Gewichtsteile der erfindungsgemäßen Zusammensetzung eingesetzt.

Es können in den erfindungsgemäßen Zusammensetzungen alle bekannten Arten von Emulgatoren eingesetzt werden. Das sind z. B. anionische, kationische, nichtionogene und amphotere Emulgatoren, Schutzkolloide und Partikel die Dispersionen stabilisieren.

Bei den Emulgatoren (4) handelt es sich vorzugsweise um kommerziell verfügbare Typen, wie z. B. Sorbitanester von Fettsäuren mit 10 bis 22 Kohlenstoffatomen; Polyoxyethylensorbitanestern von Fettsäuren mit 10 bis 22 Kohlenstoffatomen und bis zu 35 Gewichtsprozent Ethylenoxidgehalt; Polyoxyethylensorbitolestern von Fettsäuren mit 10 bis 22 Kohlenstoffatomen; Polyoxyethylenderivate von Phenolen mit 6 bis 20 Kohlenstoffatomen am Aromaten und bis zu 95 Gewichtsprozent Ethylenoxidgehalt; Fettamino- und Amidobetaine mit 10 bis 22 Kohlenstoffatomen; Polyoxyethylenkondensate von Fettsäuren oder Fettalkoholen mit 8 bis 22 Kohlenstoffatomen mit bis zu 95 Gewichtsprozent Ethylenoxidgehalt; ionische Emulgatoren, wie Alkylarylsulfonate mit 6 bis 20 Kohlenstoffatomen in der Alkylgruppe; Fettsäureseifen mit 8 bis 22 Kohlenstoffatomen; Fettsulfate mit 8 bis 22 Kohlenstoffatome; Alkylsulfonate mit 10 bis 22 Kohlenstoffatomen; Alkalimetallsalze von Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen; quarternäre Emulgatoren, wie Fettammoniumverbindungen mit 10 bis 22 Kohlenstoffatomen; Fettmorpholinoxide mit 10 bis 22 Kohlenstoffatomen; Alkalimetallsalze von carboxylierten, ethoxylierten Alkoholen mit 10 bis 22 Kohlenstoffatomen und bis zu 95 Gewichtsprozent Ethylenoxid; Ethylenoxidkondensate von Fettsäuremonoestern des Glycerins mit 10 bis 22 Kohlenstoffatomen und bis zu 95 Gewichtsprozent Ethylenoxid; Mono- oder Diethanolamide von Fettsäuren mit 10 bis 22 Kohlenstoffatomen; alkoxylierte Silicon-Emulgatoren mit Ethylenoxid- und/oder Propylenoxideinheiten; Alkylphosphate oder deren Salze.

Gegenionen können im Falle von anionischen Emulgatoren Alkalimetallionen, Ammoniumionen oder Kationen aus substituierten Aminen, wie Trimethylamin oder Triethanolamin, sein. Normalerweise sind Ammonium-, Natrium- und Kaliumionen bevorzugt. Im Falle von kationischen Emulgatoren ist das Gegenion ein Halogenid, Sulfat oder Methylsulfat. Chloride sind die zumeist industriell verfügbaren Verbindungen.

Beispiele für Emulgatoren (4) sind Decylaminobetain; Cocoamidsulfobetain; Oleylamidobetain; Cocoimidazolin; Cocosulfoimidazolin; Cetylimidazolin; 1-Hydroxyethyl-2-heptadecenyl-imidazolin; n-Cocomorpholinoxid; Decyldimethylaminoxid; Cocoamidodimethylaminoxid; Sorbitantristearat mit kondensierten Ethylenoxidgruppen; Sorbitantrioleat mit kondensierten Ethylenoxidgruppen; Natrium- oder Kaliumdodecylsulfat; Natrium- oder Kaliumstearylsulfat; Natrium- oder Kaliumdodecylbenzolsulfonat; Natrium- oder Kaliumstearylsulfonat; Triethanolaminsalz des Dodecylsulfates; Trimethyldodecylammoniumchlorid; Trimethylstearylammoniummethosulfat; Natrium- oder Kaliumlaurat; Natrium- oder Kaliummyristat, Di-n-butylphosphat, Di-n-hexylphosphat, Mono-n-octylphosphat, Di-n-octylphosphat, Mono-2-ethylhexylphosphat, Di-2-ethylhexylphosphat, Mono-i-nonylphosphat, Di-i-nonylphosphat, Mono-n-decylphosphat, n-Octyl-n-decylphosphat, Di-n-decylphosphat, Monoisotridecylphosphat, Di-n-nonylphenylphosphat, Monooleylphosphat und Distearylphosphat, Mono-n-octylphosphat, Di-n-octylphosphat, Mono-n-decylphosphat, n-Octyl-n-decylphosphat, Di-n-decylphosphat, ethoxyliertes Rizinusöl mit 200 Ethylenglycoleinheiten, ethoxyliertes Rizinusöl mit 40 Ethylenglycoleinheiten und ethoxyliertes hydriertes Rizinusöl mit 200 Ethylenglycoleinheiten, Polyoxyethylen(20)Sorbitanstearat (Polysorbat 60), Polyoxyethylen(20)Sorbitantristearat (Polysorbat 65), Polyoxyethylen(20)Sorbitanoleat (Polysorbat 80), Polyoxyethylen(20)Sorbitanlaurat (Polysorbat 20), Verbindungen der Formel $i\text{-}C_{13}H_{27}\text{-}O\text{-}(CH_2CH_2O)_{10}\text{-}H$, $i\text{-}C_{13}H_{27}\text{-}O\text{-}(CH_2CH_2O)_5\text{-}H$, $i\text{-}C_{13}H_{27}\text{-}O\text{-}(CH_2CH_2O)_8\text{-}H$, $C_{16}H_{33}\text{-}O\text{-}(CH_2CH_2O)_4\text{-}H$, $C_{16}H_{33}\text{-}O\text{-}(CH_2CH_2O)_{20}\text{-}H$,

$C_{16}H_{33}$-O-$(CH_2CH_2O)_{25}$-H, $C_{18}H_{37}$-O-$(CH_2CH_2O)_4$-H, $C_{18}H_{37}$-O-$(CH_2CH_2O)_{20}$-H, $C_{18}H_{37}$-O-$(CH_2CH_2O)_{25}$-H, $C_{18}H_{35}$-O-$(CH_2CH_2O)_{20}$-H, $C_{12}H_{23}$-O-$(CH_2CH_2O)_4$-H, $C_{12}H_{23}$-O-$(CH_2CH_2O)_{23}$-H, $C_{16}H_{33}$-$CH_2$-C(O)-O-$(CH_2CH_2O)_{20}$-H, $C_{16}H_{33}$-$CH_2$-C(O)-O-$(CH_2CH_2O)_{30}$-H, $C_{16}H_{33}$-$CH_2$-C(O)-O-$(CH_2CH_2O)_{40}$-H und $C_{16}H_{33}$-$CH_2$-C(O)-O-$(CH_2CH_2O)_{100}$-H.

Vorzugsweise haben die in der erfindungsgemäßen Dispersion enthaltenen nicht-ionischen Emulgatoren einen durchschnittlichen HLB-Wert von 8 bis 17, bevorzugt 9 bis 15.

Der HLB-Wert ist Ausdruck des Gleichgewichts zwischen hydrophilen und hydrophoben Gruppen eines Emulgators. Die Definition des HLB-Werts sowie Verfahren zu deren Ermittlung sind dem Fachmann bekannt und z. B. in Journal of Colloid and Interface Science 298 (2006), 441-450 sowie der dort zitierten Literatur, insbesondere Zitat [23], beschrieben.

Der HLB-Wert (HLB steht für engl. hydrophilic-lipophilic balance) beschreibt den hydrophilen und lipophilen Anteil von hauptsächlich nichtionischen Tensiden. Der HLB-Wert kann für nichtionische Tenside nach Hans-Dieter Dörfler, Grenzflächen- und Kolloidchemie, VCH, Weinheim, 1994, S. 198, folgendermaßen berechnet werden:

$$\mathrm{HLB} = 20 \times \left(1 - \frac{M_1}{M}\right)$$

Dabei ist $M_1$ die Molmasse des lipophilen Anteils eines Moleküls und M die Molmasse des gesamten Moleküls. Der Faktor 20 ist ein frei ausgewählter Skalierungsfaktor.

Als dispergierende Schutzkolloide können z. B. Polyvinylalkohole sowie Celluloseether, wie Methylcellulose, Hydroxyethylcellulose und Carboxymethcellulose, eingesetzt werden.

Als Partikel zur Stabilisierung von Dispersionen eignen sich beispielsweise partiell hydrophobierte hochdisperse Kieselsäuren.

Zusätzlich können bei den erfindungsgemäßen Zusammensetzungen weitere Stoffe (6) eingesetzt werden. Beispiele für weitere Stoffe (6) sind weitere Siloxane, die verschieden sind zu den β-Ketocarbonyl-funktionellen Organosiliciumverbindungen (1) und der aminofunktionellen Organosiliciumverbindungen (2), z. B. Polyethersiloxane; Silane, insbesondere Alkoxysilane; Verdicker und/oder Schutzkolloide; Füllstoffe sowie Additive, wie beispielsweise Konservierungsmittel, Desinfektionsmittel, Netzmittel, Korrosionsinhibitoren, Farbstoffe und Duftstoffe.

Falls bei der erfindungsgemäßen Dispersion Verdicker bzw. Schutzkolloide eingesetzt werden, handelt es sich bevorzugt um Acrylsäurecopolymere, Celluloseether und Polysacharide, wie z. B. Xanthan Gum.

Falls Verdicker und/oder Schutzkolloide eingesetzt werden, werden sie in Mengen von bevorzugt 0,01 bis 2 Gewichtsteilen, bezogen auf 100 Gewichtsteile der β-Ketocarbonyl-funktionellen Organosiliciumverbindungen (1) und der aminofunktionellen Organosiliciumverbindungen (2) eingesetzt.

Beispiele für Additive, die erfindungsgemäß eingesetzt werden können, sind z. B. dem Fachmann bekannte Konservierungsmittel, Farb- oder Duftstoffe, insbesondere Konservierungsmittel, wie Methylisothiazolinon, Chlormethylisothiazolinon, Benzylisothiazolinon, Phenoxyethanol, Methylparaben, Ethylparaben, Propylparaben, Butylparaben, Isobutylparaben, Alkalibenzoate, Alkalisorbate, Iodopropinylbutylcarbamat, Benzylalkohol oder 2-Brom-2-nitropropan-1,3-diol.

Falls Additive eingesetzt werden, werden sie in Mengen von bevorzugt 0,0005 bis 2 Gewichtsteilen, bezogen auf 100 Gewichtsteile der β-Ketocarbonyl-funktionellen Organosiliciumverbindungen (1) und der aminofunktionellen Organosiliciumverbindungen (2) eingesetzt.

Die erfindungsgemäßen Dispersionen haben einen Gehalt an nichtflüchtigen Anteilen gemessen nach DIN EN ISO 3251 von bevorzugt 1 bis 80 Gew.-%, besonders bevorzugt von 30 bis 70 Gew.-%.

Der pH-Wert der erfindungsgemäßen Dispersionen beträgt vorzugsweise 3 bis 11, besonders bevorzugt 5 bis 9.

Als Misch- und Homogenisierwerkzeuge, die eingesetzt werden können, um die erfindungsgemäßen Zusammenetzungen in Form von wässrigen Dispersionen herzustellen, sind alle dem Fachmann bekannten Dispergiergeräte, wie beispielsweise Rührer, Dissolverscheiben, Rotor-Stator-Homogenisatoren, Ultraschallhomogenisatoren und Hochdruckhomogenisatoren verschiedenster Bauart, geeignet.

Die Herstellung der wässrigen Dispersion kann kontinuierlich, semikontinuierlich oder diskontinuierlich betrieben werden.

Zur Herstellung der erfindungsgemäßen Dispersionen können die β-Ketocarbonyl-funktionelle Organosiliciumverbindungen (1) und die aminofunktionelle Organosiliciumverbindungen (2) und eventuell weitere wasserunlösliche Komponenten zunächst einzeln, getrennt voneinander dispergiert und die so erzeugten Dispersionen im Anschluss vermischt werden oder in beliebigen Kombinationen zusammen dispergiert und diese Dispersionen dann vermischt werden. Etwaig enthaltene wasserlösliche Organometallverbindungen (3) und Additive können beispielsweise am Schluss in die erfindungsgemäßen Dispersionen eingerührt werden.

Vorzugsweise werden die erfindungsgemäßen Zusammensetzungen in Form von wässrigen Dispersionen aus β-Ketocarbonyl-funktioneller Organosiliciumverbindungen (1) und aminofunktioneller Organosiliciumverbindungen (2), Emulgatoren und gegebenenfalls Organometallverbindung (3), und ggf. Additiven so hergestellt, dass erst ein Teil des Wassers (5) mit den übrigen Komponenten vermischt wird und eine hochviskose und nicht fließfähige Paste entsteht. Besonders bevorzugt ist es, wenn die Fließgrenze (entsprechend DIN 53019-1 und dort zitierten Normen) dieser pastösen Vormischung größer als 100 Pa (25°C), insbesondere größer als 1000 Pa (25°C), ist. Vorzugsweise wird diese pastöse Vormischung dann unter Einwirkung von Scherenergie homogenisiert bis die gewünschte Teilchengröße erreicht wird und mit Wasser unter Rühren und/oder Homogenisieren verdünnt, so dass eine fließfähige Dispersion gebildet wird. Wasserlösliche Organometallverbindungen und / oder Additive werden bevorzugt am Schluss in diese Dispersion eingerührt.

Vorzugsweise enthalten die erfindungsgemäßen Dispersionen mehr als 50 Gewichtsteile, bevorzugt 50 bis 1000 Gewichtsteile, besonders bevorzugt 80 bis 500 Gewichtsteile, Wasser (5), bezogen auf 100 Gewichtsteile β-Ketocarbonyl-funktionelle Organosiliciumverbindungen (1) und aminofunktionelle Organosiliciumverbindungen (2).

Ein weiterer Gegenstand der Erfindung ist ein Verfahren zur Ausrüstung oder Imprägnierung von faserigen Substraten, insbesondere zur Hydrophobierung von faserigen Substraten, mit den erfindungsgemäßen Zusammensetzungen.

Beispiele für faserige Substrate sind natürliche oder synthetisch hergestellte Fasern, Garne, Stränge, Seile, textile Flächengebilde wie Vliese, Matten, gewebte, geknüpfte, gewirkte oder gestrickte Textilien, sowie Leder und Kunstleder. Bevorzugte faserige Substrate sind Textilien. Für den Auftrag der erfindungsgemäßen Zusammensetzung können die Textilien in Form von Einzelfasern, Faserbündeln, Füllfasern, Garnen, Teppichen, Stoffbahnen oder Kleidungsstücken oder Teilen von Kleidungsstücken vorliegen.

Die Textilien können aus Baumwolle, Wolle, Mischpolymere von Vinylacetat, Rayon, Hanf, natürlicher Seide, Polypropylen, Polyethylen, Polyester, Polyurethan, Polyamid, Aramid, Polyimid, Polyacrylat, Polyacrylnitril, Polylactid, Polyvinylchlorid, Glasfasern, Keramikfasern, Cellulose oder deren Gemische bestehen.

Das Auftragen auf die zu behandelnden Textilien kann in beliebiger für die Behandlung von Textilien geeigneter und vielfach bekannter Weise, z.B. durch Tauchen, Streichen, Gießen, Sprühen, Aufwalzen, Klotzen, Drucken oder Schaumauftrag erfolgen.

In der Anwendung kann die erfindungsgemäße Zusammensetzung mit gebrauchsüblichen Textilhilfsmitteln, wie zum Beispiel Bindemittel aus Melamin- oder Methylolharzen, Polyurethanen, Polyacrylaten, Polyvinylalkoholen, Polyvinylacetaten, optischen Aufhellern, Benetzungshilfsmitteln, Entschäumern oder weiteren Hydrophobier- und Oleophobierhilfsmitteln, wie perfluorierte Kohlenwasserstoffe, kombiniert werden.

Die behandelten Textilien werden vorzugsweise bei Temperaturen von 10°C bis 250°C, bevorzugt 25 bis 200°C, besonders bevorzugt 80°C bis 180°C, trocknen gelassen.

Hierbei erfolgt die Vernetzung der erfindungsgemäßen Zusammensetzung, wodurch die behandelten Textilien wasserabweisend gemacht werden.

Die erfindungsgemäßen Zusammensetzungen aus β-Ketocarbonyl-funktionellen Organosiliciumverbindungen (1), amino-funktionellen Organosiliciumverbindungen (2) und gegebenenfalls Organometallverbindungen (3) haben den Vorteil, dass sie eine sehr gute wasserabweisende Ausrüstung unterschiedlicher Textilien ermöglichen, dass sie einfach und sicher verarbeitbar sind, dass sie ohne dauerhaft umweltbelastende Stoffe hergestellt werden können, und dass die wasserabweisende Ausrüstung eine sehr gute Waschpermanenz aufweist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1010 hPa, und bei Raumtemperatur, also etwa 25°C bzw. einer Temperatur, die sich beim Zusammengeben der Reaktanten bei Raumtemperatur ohne zusätzliche Heizung oder Kühlung einstellt, durchgeführt.

Alle in den Beispielen angeführten Viskositätsangaben beziehen sich auf eine Temperatur von 25°C.
Die Messung wurde für Werte zwischen 2000 und 4000 mPas mit einem Brookfield Viskosimeter RVDVI+ der Fa. Brookfield D-73547 Lorch unter Verwendung der Spindel RV 1 bei einer Rotationsgeschwindigkeit von 2,5 Umdrehungen pro Minute, und für Werte zwischen 4000 und 14000 mPas mit dem gleichen Gerät unter Verwendung der Spindel RV 2 bei einer Rotationsgeschwindigkeit von 2,5 Umdrehungen pro Minute durchgeführt. Die Methode ist in den Beispielen durch Angabe der Einheit [mPas] erkennbar.
Für Werte <2000 mPas erfolgt die Viskositätsmessung mit einem Ubbelohde-Viskosimeter nach DIN 51562-1. Die Methode ist in den Beispielen durch Angabe der Einheit [$mm^2/s$] erkennbar.

Bei den Angaben der HLB-Werte wurde auf die HLB-Werte zurückgegriffen, wie sie von den jeweiligen Herstellern angegeben werden. Da es sich bei Emulgatoren, wie beispielsweise den Polyethern, zumeist um Oligomere/Polymere mit einer Molekulargewichtsverteilung handelt, kann diese Verteilung von Hersteller zu Hersteller unterschiedlich sein. So kann es auch von Hersteller zu Hersteller zu unterschiedlichen Angaben des entsprechenden HLB-Wertes kommen, der sich auch vom theoretisch ermittelten HLB-Wert des jeweils angegebenen chemischen Namens unterscheiden kann.

Die Partikelgrößen werden an einem Partikelgrößenmessgerät Zetasizer Nano-S, Fa. Malvern, Software Version 6.01 mittels dynamischer Lichtstreuung (Messmethode nach Mie) bestimmt. Dazu werden die Dispersionen mit gefiltertem und entgastem Wasser auf 0,5 Gew.-% verdünnt. Die angegebenen Werte beziehen sich immer auf den Wert D(50). D(50) ist als volumengemittelter Partikeldurchmesser zu verstehen, bei dem 50% aller gemessenen Partikel einen volumengemittelten Durchmesser kleiner als der ausgewiesene Wert D(50) aufweisen. Die Messungen erfolgen bei 25°C mit folgenden festgelegten Einstellungen: Brechungsindex Wasser (Dispersant RI) bei 1,330; Viskosität (cP) bei 0,8872; Brechungsindex der dispersen Phase (Material RI) bei 1,39; Materialabsorption bei 0,010; Messdauer (Duration Used) bei 50 s; Messposition (Measurement Position) bei 0,65 mm. Die in den Dispersionsbeispielen angegebenen Photonenzählraten ergeben sich aus dem jeweiligen Verdünnungsgrad der Messproben und sind daher unterschiedlich. Wichtig ist dabei nur, dass das Messprogramm die Ergebnisse mit dem Vermerk, Result Quality: Good' freigibt.

Die Hydrophobie der behandelten Textilien wird mittels Spraytest gemäß AATCC Testmethode Nr. 22-2005 geprüft. Dabei werden die Textilen mit entionisiertem Wasser besprenkelt. Das Ergebnis, das aus dem Vergleich der besprenkelten Textil-Oberfläche mit den Rating-Bildern in der Methodenbeschreibung resultiert, gibt in etwa an, wieviel % der Fläche unbenetzt geblieben ist. Ein Spraywert von 100 bedeutet ein völlig unbenetztes Textil.

**Herstellung der β-Ketocarbonyl-funktionellen Organosiliciumverbindungen (1)**

Synthesebeispiel 1 einer β-Ketocarbonyl-funktionellen Organosiliciumverbindung (1):

50,7 g techn. Alkylketen-Dimer (erhältlich bei der Fa. TRIGON Chemie GmbH), welches aus einem Gemisch aus Palmitinsäure/Stearinsäure (ca. 30/70) hergestellt wurde, woraus ein Rest $R^3$ von $C_{14}$/$C_{16}$-Alkyl resultiert, werden bei 50°C aufgeschmolzen. 500,0 g eines Polysiloxans bestehend aus (3-Aminopropyl)dimethylsiloxy- und Dimethylsiloxyeinheiten der Viskosität von 508 $mm^2$/s (bei 25°C) und einer Aminzahl von 0,18 mmol/g werden über einen Zeitraum von 70 min derart zudosiert, dass die Temperatur der Reaktionsmischung 75°C nicht überschreitet. Die technische Ware an Alkylketen-Dimer hat einen Diketen-Gehalt von 85%, so dass eine Stöchiometrie Alkylketen-Dimer : Polysiloxan von 1,0 : 1,0 resultiert. Nach Dosierende wird die Temperatur auf 100°C erhöht und bei dieser Temperatur eine Stunde weiter gerührt. Nach Abkühlen auf Raumtemperatur erhält man eine β-Ketocarbonyl-funktionelle Organosiliciumverbindung (1), in der kein freies Amin mehr nachweisbar ist.

Synthesebeispiel 2 einer β-Ketocarbonyl-funktionellen Organosiliciumverbindung (1):

83,3 g des in Beispiel 1 beschriebenen Alkylketen-Dimers werden in zu Beispiel 1 analoger Art mit 250 g eines gemischt Hydroxy-/Methoxy-terminierten Copolymers aus (2-Aminoethyl-3-aminopropyl)methylsiloxy- und Dimethylsiloxyeinheiten der Viskosität von 977 $mm^2$/s (25°C) und einer Aminzahl von 0,58 mmol/g umgesetzt. Man erhält eine β-Ketocarbonyl-funktionelle Organosiliciumverbindung (1), in der kein freies Amin mehr nachweisbar ist.

Synthesebeispiel 3 einer β-Ketocarbonyl-funktionellen Organosiliciumverbindung (1):

133 g des in Beispiel 1 beschriebenen Alkylketen-Dimers werden in zu Beispiel 1 analoger Art mit 200 g eines gemischt Hydroxy-/Methoxy-terminierten Copolymers aus (2-Aminoethyl-3-aminopropyl)methoxysiloxy- und Dimethylsiloxyeinheiten der Viskosität von 25 $mm^2$/s (25°C) und einer Aminzahl von 2,4 mmol/g umgesetzt. Man erhält eine β-Ketocarbonyl-funktionelle Organosiliciumverbindung (1), in der kein freies Amin mehr nachweisbar ist.

Synthesebeispiel 4 einer β-Ketocarbonyl-funktionellen Organosiliciumverbindung (1):

114 g des in Beispiel 1 beschriebenen Alkylketen-Dimers werden in zu Beispiel 1 analoger Art mit 263 g eines Polysiloxans bestehend aus (2-Aminoethyl-3-aminopropyl)dimethylsiloxy- und Dimethylsiloxyeinheiten der Viskosität von 119 $mm^2$/s (25°C) und einer Aminzahl von 0,76 mmol/g umgesetzt. Man erhält eine β-Ketocarbonyl-funktionelle Organosiliciumverbindung (1), in der kein freies Amin mehr nachweisbar ist.

Synthesebeispiel 5 einer β-Ketocarbonyl-funktionellen Organosiliciumverbindung (1):

19 g des in Beispiel 1 beschriebenen Alkylketen-Dimers werden in zu Beispiel 1 analoger Art mit 358 g eines Polysiloxans aus (3-Aminopropyl)methylsiloxy-, Trimethylsiloxy- und Dimethylsiloxyeinheiten der Viskosität von 259 $mm^2$/s (25°C) und einer Aminzahl von 0,093 mmol/g umgesetzt. Man erhält eine β-Ketocarbonyl-funktionelle Organosiliciumverbindung (1), in der kein freies Amin mehr nachweisbar ist.

Synthesebeispiel 6 einer β-Ketocarbonyl-funktionellen Organosiliciumverbindung (1), wobei $R^3$ gleich H anstelle eines Kohlenwasserstoffs im Rest A der Formel (I) ist:

136,5 g eines Polysiloxans bestehend aus (2-Aminoethyl-3-aminopropyl)methylsiloxy- und Dimethylsiloxyeinheiten der Viskosität von 980 $mm^2/s$ und einer Aminzahl von 0,293 mmol/g werden mit 4,7 g Aceton 4 Stunden bei 25°C gerührt. Danach erfolgt eine Zugabe von 3,7 g Diketen, worauf eine leichte Temperaturerhöhung einsetzt. Nach weiteren 2 Stunden wird das Aceton bei 70°C im Vakuum entfernt. Man erhält ein klares, gelbliches Öl mit einer Viskosität von 4900 $mm^2/s$ (25°C). Im $^1H$-NMR-Spektrum ist ein vollständiger Aminumsatz erkennbar.

**Herstellung der aminofunktionellen Organosiliciumverbindung (2)**

Synthesebeispiel 7 einer wachsartigen aminofunktionellen Organosiliciumverbindung (2):

a) Hydrolyse des 3-Aminopropyl-methyl-diethoxysilans:

170,0 g 3-Aminopropyl-methyl-diethoxysilan werden in Stickstoff-Atmosphäre auf 50°C erwärmt. Dann werden innerhalb 20 Minuten unter Rühren 50,0 g vollentsalztes Wasser zugetropft, wobei die Temperatur auf ca. 80°C ansteigt. Anschließend wird die Temperatur auf 100°C erhöht und freigewordenes Ethanol zunächst bei Normaldruck, später unter zunehmendem Vakuum ausdestilliert, bis bei 100°C unter Vollvakuum kein Destillat mehr kommt. Nach Abkühlen erhält man etwa 100 g einer farblosen bis leicht gelblichen Flüssigkeit mit einer Viskosität von 850 $mm^2/s$ (25°C) und einer Aminzahl von 8,3 mmol/g.

b) Herstellung der wachsartigen aminofunktionellen Organosiliciumverbindung (2):

1013,0 g eines Polysiloxans bestehend aus Trimethylsiloxy- und (Octadecyl)methylsiloxyeinheiten mit einem Schmelzpunkt von 41°C werden in Stickstoff-Atmosphäre auf 60°C erwärmt. 56,4 g des Hydrolysats aus a) werden in die Schmelze eingerührt, bevor die Mischung auf 90°C aufgeheizt wird. Es werden 2,0 g einer 40%-igen wässrigen Lösung aus Tetrabutylphosphoniumhydroxid zugegeben. Die leicht trübe Mischung wird bis zum Aufklaren 5 Stunden bei 90°C gerührt. Danach werden 0,3 g 90%-ige Milchsäure zugegeben und 30 Minuten bei 90°C weitergerührt. Die Temperatur wird anschließend auf 160°C erhöht und langsam Vakuum bis zum Vollvakuum angelegt. Sobald keine flüchtigen Anteile mehr ausdestillieren, lässt man abkühlen. Man erhält einen leicht bräunlichen, wachsartigen Feststoff mit einer Schmelztemperatur von 45°C und einer Aminzahl von 0,44 mmol/g.

**Herstellung der Dispersionen von (1)**

Dispersionsbeispiel 1: Dispersion aus β-Ketocarbonyl-funktioneller Organosiliciumverbindung (1) von Synthesebeispiel 1:

6,0 g Laurinsäure, käuflich erwerblich bei der Fa. Merck Schuchardt), 3,9 g einer wässrigen Lösung an Kaliumhydroxid (50%ig) sowie 2,0 g Polyoxyethylen(4)laurylether (HLB-Wert = 9,7), käuflich erwerblich unter dem Handelsnamen Sympatens-ALM/040 (Fa. Kolb) und 6,7 g vollentsalztes Wasser werden in einem Metallbecher vorgelegt und im Trockenschrank auf 60°C erwärmt. Die nun flüssige Mischung wird mit Hilfe eines Ultra-Turrax T 50 Dispergiergerät (Fa. Janke & Kunkel/IKA) homogenisiert. 70 g der β-Ketocarbonyl-funktionellen Organosiliciumverbindung (1) aus Synthesebeispiel 1 werden in dieser Zeit bei 60°C im Trockenschrank aufgeschmolzen und in drei Portionen unter hoher Scherung von 6000 bis 8000 UpM derart zugegeben, dass eine relativ feste steife Phase als Vordispersion resultiert. Es wird mit 110,8 g vollentsalztem, auf 60°C erwärmtem Wasser portionsweise unter geringer Scherung zur gewünschten Dispersion verdünnt. Es resultiert eine milchig-weiße Dispersion mit einer durchschnittlichen Partikelgröße D(50) von 171 nm bei einer Photonenzählrate von 364 kcps (kilo-Counts per second). Die Dispersion wird mit Hilfe eines Exsikkators vorsichtig entlüftet.

Dispersionsbeispiele 2 bis 5: Dispersionen aus β-Ketocarbonyl-funktioneller Organosiliciumverbindung (1) von Synthesebeispielen 2 bis 5:

Unter Verwendung der gleichen Typen und Mengen der Emulgator-Wasser-Mischung aus Dispersionsbeispiel 1 (6,0 g Laurinsäure, 3,9 g einer wässrigen Lösung an Kaliumhydroxid (50%ig), 2,0 g Polyoxyethylen(4)laurylether (HLB-Wert = 9,7), 6,7 g vollentsalztem Wasser), 70 g β-Ketocarbonyl-funktioneller Organosiliciumverbindung (1) nach Synthesebeispielen 2 bis 5 sowie 110,8 g erwärmtem Wasser werden die Dispersionen 2 bis 5 hergestellt.

Im Falle der β-Ketocarbonyl-funktionellen Organosiliciumverbindung nach Synthesebeispiel 2 resultiert eine

milchig-weiße Dispersion mit einer durchschnittlichen Partikelgröße D(50) von 177 nm bei einer Photonenzählrate von 207 kcps.

Im Falle der β-Ketocarbonyl-funktionellen Organosiliciumverbindung nach Synthesebeispiel 3 resultiert eine milchig-weiße Dispersion mit einer durchschnittlichen Partikelgröße D(50) von 105 nm bei einer Photonenzählrate von 393 kcps.

Im Falle der β-Ketocarbonyl-funktionellen Organosiliciumverbindung nach Synthesebeispiel 4 resultiert eine milchig-weiße Dispersion mit einer durchschnittlichen Partikelgröße D(50) von 153 nm bei einer Photonenzählrate von 271 kcps.

Im Falle der β-Ketocarbonyl-funktionellen Organosiliciumverbindung nach Synthesebeispiel 5 resultiert eine milchig-weiße Dispersion mit einer durchschnittlichen Partikelgröße D(50) von 170 nm bei einer Photonenzählrate von 221 kcps.

Dispersionsbeispiel 6: Dispersion aus β-Ketocarbonyl-funktioneller Organosiliciumverbindung (1) von Synthesebeispiel 6:

4,0 g Polyoxyethylen(5)isotridecylether, käuflich erwerblich unter dem Handelsnamen Lutensol® TO 5 (Fa. BASF) (HLB-Wert = 10,5), 8,0 g Polyoxyethylen(8)isotridecylether, käuflich erwerblich unter dem Handelsnamen Lutensol® TO 8 (Fa. BASF) (HLB-Wert ca. 13) und 13,4 g vollentsalztes Wasser werden in einem Metallbecher vorgelegt. Die flüssige Mischung wird mit Hilfe eines Ultra-Turrax T 50 Dispergiergerät (Fa. Janke & Kunkel/IKA) homogenisiert. Es werden 66,2 g der β-Ketocarbonyl-funktionellen Organosiliciumverbindung aus Synthesebeispiel 6 in drei Portionen unter hoher Scherung von 6000 bis 8000 UpM derart zugegeben, dass eine relativ feste steife Phase als Vordispersion resultiert. Es wird mit 107,6 g vollentsalztem Wasser portionsweise unter geringer Scherung zur gewünschten Dispersion verdünnt. Es resultiert eine milchig-weiße Dispersion mit einer durchschnittlichen Partikelgröße D(50) von 185 nm bei einer Photonenzählrate von 387 kcps. Die Dispersion wird mit Hilfe eines Exsikkators vorsichtig entlüftet.

**Herstellung der Dispersionen von (2)**

Dispersionsbeispiel 7: Dispersion aus einer aminofunktionellen Organosiliciumverbindung (2):

9,7 g einer 80%-igen wässrigen Lösung aus Polyoxyethylen(10)-isotridecylether, käuflich erwerblich unter dem Handelsnamen Lutensol® TO 108 (Fa. BASF) (HLB-Wert = 13,7) und 2,9 g vollentsalztes Wasser werden in einem Metallbecher vorgelegt. Die flüssige Mischung wird mit Hilfe eines Ultra-Turrax T 50 Dispergiergerät (Fa. Janke & Kunkel/IKA) homogenisiert. 70 g eines gemischt Hydroxy-/Methoxy-terminierten Copolymers aus (2-Aminoethyl-3-aminopropyl)methylsiloxy- und Dimethylsiloxyeinheiten der Viskosität von 3552 mPas (25°C) und einer Aminzahl von 0,14 mmol/g werden in drei Portionen unter hoher Scherung von 6000 bis 8000 UpM derart zugegeben, dass eine relativ feste steife Phase als Vordispersion resultiert. Es wird mit 118,0 g vollentsalztem Wasser portionsweise unter geringer Scherung verdünnt und die resultierende Dispersion mit 0,3 g 80%-iger Essigsäure in Wasser stabilisiert. Es resultiert eine milchig-weiße Dispersion mit einer durchschnittlichen Partikelgröße D(50) von 116 nm bei einer Photonenzählrate von 246 kcps. Die Dispersion wird mit Hilfe eines Exsikkators vorsichtig entlüftet.

Dispersionsbeispiel 8: Dispersion aus einer aminofunktionellen Organosiliciumverbindung (2):

12,5 g einer 80%-igen wässrigen Lösung aus Polyoxyethylen(10)-isotridecylether, käuflich erwerblich unter dem Handelsnamen Lutensol® TO 108 (Fa. BASF) (HLB-Wert = 13,7), 5,0 g vollentsalztes Wasser und 0,7 g 80%-ige Essigsäure in Wasser werden in einem Metallbecher vorgelegt. Die flüssige Mischung wird mit Hilfe eines Ultra-Turrax T 50 Dispergiergerät (Fa. Janke & Kunkel/IKA) homogenisiert. Es werden zunächst 4,5 g eines gemischt Hydroxy-/Methoxy-terminierten Copolymers aus (2-Aminoethyl-3-aminopropyl)methoxysiloxy- und Dimethylsiloxyeinheiten der Viskosität von 29 $mm^2/s$ (25°C) und einer Aminzahl von 2,9 mmol/g und dann 95,5 g eines Hydroxy-terminierten Polydimethylsiloxans der Viskosität von 5960 mPas in drei Portionen unter hoher Scherung von 6000 bis 8000 UpM derart zugegeben, dass eine relativ feste steife Phase als Vordispersion resultiert. Es wird mit 81,5 g vollentsalztem Wasser portionsweise unter geringer Scherung zur gewünschten Dispersion verdünnt. Es resultiert eine milchig-weiße Dispersion mit einer durchschnittlichen Partikelgröße D(50) von 180 nm bei einer Photonenzählrate von 217 kcps. Die Dispersion wird mit Hilfe eines Exsikkators vorsichtig entlüftet.

Dispersionsbeispiel 9: Dispersion aus einer wachsartigen aminofunktionellen Organosiliciumverbindung (2) aus Synthesebeispiel 7 b):

9,7 g einer 80%-igen wässrigen Lösung aus Polyoxyethylen(10)-isotridecylether, käuflich erwerblich unter dem

Handelsnamen Lutensol® TO 108 (Fa. BASF) (HLB-Wert = 13,7) und 2,9 g vollentsalztes Wasser werden in einem Metallbecher vorgelegt und im Trockenschrank auf 60°C erwärmt. Die flüssige Mischung wird mit Hilfe eines Ultra-Turrax T 50 Dispergiergerät (Fa. Janke & Kunkel/IKA) homogenisiert. 70 g eines wachsartigen Trimethylsilyl-terminierten Copolymers aus (3-Aminopropyl)-methylsiloxy- und Octadecylmethylsiloxyeinheiten aus Synthesebeispiel 7 b werden in dieser Zeit bei 60°C im Trockenschrank aufgeschmolzen und in drei Portionen unter hoher Scherung von 6000 bis 8000 UpM derart zugegeben, dass eine relativ feste steife Phase als Vordispersion resultiert. Es wird mit 118,0 g vollentsalztem Wasser portionsweise unter geringer Scherung verdünnt und die resultierende Dispersion mit 2,0 g 80%-iger Essigsäure in Wasser stabilisiert. Es resultiert eine milchig-weiße Dispersion mit einer durchschnittlichen Partikelgröße D(50) von 171 nm bei einer Photonenzählrate von 275 kcps. Die Dispersion wird mit Hilfe eines Exsikkators vorsichtig entlüftet.

**Herstellung von Dispersionen aus den erfindungsgemäßen Zusammensetzungen enthaltend (1), (2) und ggf. (3)**

<u>Dispersionsbeispiel 10 (erfindungsgemäße Zusammensetzung):</u> Dispersion aus β-Ketocarbonyl-funktioneller Organosiliciumverbindung (1) von Synthesebeispiel 1 und einer aminofunktioneller Organosiliciumverbindung (2):

9,7 g einer 80%-igen wässrigen Lösung aus Polyoxyethylen(10)isotridecylether, käuflich erwerblich unter dem Handelsnamen Lutensol® TO 108 (Fa. BASF) (HLB-Wert = 13,7), 2,9 g vollentsalztes Wasser und 0,2 g 80%-ige Essigsäure in Wasser werden in einem Metallbecher vorgelegt und im Trockenschrank auf 60°C erwärmt. Die flüssige Mischung wird mit Hilfe eines Ultra-Turrax T 50 Dispergiergerät (Fa. Janke & Kunkel/IKA) homogenisiert. 43 g der β-Ketocarbonyl-funktionellen Organosiliciumverbindung (1) aus Synthesebeispiel 1 und 27 g eines gemischt Hydroxy-/Methoxy-terminierten Copolymers aus (2-Aminoethyl-3-aminopropyl)methylsiloxy- und Dimethylsiloxyeinheiten der Viskosität von 3552 mPas (25°C) und einer Aminzahl von 0,14 mmol/g werden in dieser Zeit bei 60°C im Trockenschrank aufgeschmolzen bzw. erwärmt und jeweils in zwei Portionen unter hoher Scherung von 6000 bis 8000 UpM hintereinander derart zugegeben, dass eine relativ feste steife Phase als Vordispersion resultiert. Es wird mit 118,0 g vollentsalztem Wasser portionsweise unter geringer Scherung zur gewünschten Dispersion verdünnt. Es resultiert eine milchig-weiße Dispersion mit einer durchschnittlichen Partikelgröße D(50) von 163 nm bei einer Photonenzählrate von 420 kcps. Die Dispersion wird mit Hilfe eines Exsikkators vorsichtig entlüftet.

<u>Dispersionsbeispiel 11 (erfindungsgemäße Zusammensetzung):</u> Dispersion aus β-Ketocarbonyl-funktioneller Organosiliciumverbindung (1) von Synthesebeispiel 2 und einer aminofunktioneller Organosiliciumverbindung (2):

9,7 g einer 80%-igen wässrigen Lösung aus Polyoxyethylen(10)-isotridecylether, käuflich erwerblich unter dem Handelsnamen Lutensol® TO 108 (Fa. BASF) (HLB-Wert = 13,7), 2,9 g vollentsalztes Wasser und 0,3 g 80%-ige Essigsäure in Wasser werden in einem Metallbecher vorgelegt und im Trockenschrank auf 60°C erwärmt. Die flüssige Mischung wird mit Hilfe eines Ultra-Turrax T 50 Dispergiergerät (Fa. Janke & Kunkel/IKA) homogenisiert. 23 g der β-Ketocarbonyl-funktionellen Organosiliciumverbindung (1) aus Synthesebeispiel 2 und 47 g eines gemischt Hydroxy-/Methoxy-terminierten Copolymers aus (2-Aminoethyl-3-aminopropyl)methylsiloxy- und Dimethylsiloxyeinheiten der Viskosität von 3552 mPas (25°C) und einer Aminzahl von 0,14 mmol/g werden in dieser Zeit bei 60°C im Trockenschrank aufgeschmolzen bzw. erwärmt und jeweils in zwei Portionen unter hoher Scherung von 6000 bis 8000 UpM hintereinander derart zugegeben, dass eine relativ feste steife Phase als Vordispersion resultiert. Es wird mit 118,0 g vollentsalztem Wasser portionsweise unter geringer Scherung zur gewünschten Dispersion verdünnt. Es resultiert eine milchig-weiße Dispersion mit einer durchschnittlichen Partikelgröße D(50) von 171 nm bei einer Photonenzählrate von 292 kcps. Die Dispersion wird mit Hilfe eines Exsikkators vorsichtig entlüftet.

<u>Dispersionsbeispiel 12 (erfindungsgemäße Zusammensetzung):</u> Dispersion aus β-Ketocarbonyl-funktioneller Organosiliciumverbindung (1) von Synthesebeispiel 1, einer aminofunktioneller Organosiliciumverbindung (2) und Zirkonacetat als Organometallverbindung (3):

Dispersionsbeispiel 12 wird wie Dispersionsbeispiel 10 hergestellt, allerdings ohne Zusatz von Essigsäure und es werden nach der Verdünnung mit Wasser 25 g einer Zirkonacetat-Lösung (Fa. Brenntag) mit einem Gehalt von etwa 22% $ZrO_2$ eingerührt. Es resultiert eine milchig-weiße Dispersion mit einer durchschnittlichen Partikelgröße D(50) von 186 nm bei einer Photonenzählrate von 339 kcps. Die Dispersion wird mit Hilfe eines Exsikkators vorsichtig entlüftet.

**Ausführungsbeispiele:**

Erfindungsgemäße Zusammensetzungen, jeweils enthaltend eine β-Ketocarbonyl-funktionelle Organosiliciumverbindung (1) und eine aminofunktionelle Organosiliciumverbindung (2) und gegebenenfalls eine Organometallverbindung (3), sowie auch nicht erfindungsgemäße Zusammensetzungen, enthaltend entweder nur eine β-Ketocarbonyl-funktionelle Organosiliciumverbindung (1) oder nur eine aminofunktionelle Organosiliciumverbindung (2) und gegebenenfalls eine Organometallverbindung (3), werden in den Mengenanteilen, wie in den in den Tabellen 1 und 2 bis 5 aufgeführten Ausführungsbeispielen dargestellt, durch Vermischen der einzelnen Komponenten hergestellt.

Die Ausführungsbeispiele 1 und 2 sind dabei erfindungsgemäße Zusammensetzungen gelöst in organischen Lösungsmitteln (siehe Tabelle 1).

Die Ausführungsbeispiele 3 bis 25 sind dabei erfindungsgemäße bzw. nicht erfindungsgemäße Zusammensetzungen in Form ihrer wässrigen Dispersionen (siehe Tabelle 2 bis 5).

In den Ausführungsbeispielen 1 und 2 werden die Einzelkomponenten in jeweils ca. 100 ml Petroleumbenzin vorgelöst, diese Lösungen gemischt, für die Ausrüstung auf Textilien mit Petroleumbenzin (Siedebereich 60 bis 80°C) im Laborabzug auf einen Liter Flotte verdünnt und dann folgendermaßen auf textile Flächengebilde aufgebracht:
Verwendet wird ein DIN A4 großes Stück einer gebleichten, unausgerüsteten Polyester-Baumwoll-Popeline (65% PET, 35% CO) mit einem Flächengewicht von 185 $g/m^2$.
Der Stoff wird in die Flotte getaucht und anschließend in einem Mathis-Laborspannrahmen aufgespannt horizontal im Abzug über Nacht trocknen gelassen. Am folgenden Tag wird im Spannrahmen bei 150°C 5 Minuten nachvernetzt. Danach wird die Ware mindestens 72 Stunden im Klimaraum bei 23°C und 60 % Luftfeuchtigkeit klimatisiert, damit sie zur Bestimmung der Hydrophobierung ausreichend konditioniert ist.

In den Ausführungsbeispielen 3 bis 25 werden die entsprechenden Dispersionen bzw. Mischungen für die Ausrüstung auf Textilien mit Wasser auf einen Liter Flotte verdünnt und dann folgendermaßen auf textile Flächengebilde aufgebracht: Verwendet wird ein DIN A4 großes Stück einer gebleichten, unausgerüsteten Polyester-Baumwoll-Popeline (65% PET, 35% CO) mit einem Flächengewicht von 185 $g/m^2$.
Der Stoff wird jeweils in eine wässrige Flotte getaucht und anschließend mit einem Zweiwalzenfoulard auf 50 % Flottenaufnahme abgequetscht, aufgespannt und in einem Mathis-Laborspannrahmen bei 150°C 5 Minuten getrocknet. Danach wird die Ware mindestens 72 Stunden im Klimaraum bei 23°C und 60 % Luftfeuchtigkeit klimatisiert, damit sie zur Bestimmung der Hydrophobierung ausreichend konditioniert ist.

Nach Durchführung des Spraytests werden die Textilien über Nacht im Klimaraum an der Wäscheleine getrocknet.

Für die Untersuchung der Waschechtheiten werden alle ausgerüsteten Textilien einmal zusammen mit ca. 2 kg Ballaststoff in einer Haushaltswaschmaschine der Marke MIELE Softtronic W 1935 mit dem Waschprogramm Express 20 für 20 Minuten bei 40°C gewaschen und geschleudert. Als Waschtensid werden dabei 5 g eines Flüssigwaschmittels der Marke "Spee Feinwaschmittel" von der Firma Henkel dosiert. Anschließend wird die Ware mindestens 12 Stunden im Klimaraum bei 23°C und 60 % Luftfeuchtigkeit getrocknet und klimatisiert.

Zur Entfernung des Waschknitters werden die Prüflinge mit einem Bügeleisen der Marke Philips Azur 4043 auf Stufe II gebügelt. Die Warenmuster werden dann erneut auf Hydrophobie nach der Spray-Test Methode geprüft.

Die Ausführungsbeispiele mit Mischungseinwaagen und Spraytest-Ergebnissen vor dem Waschen und nach einer Haushaltswäsche sind in den Tabellen 1 bis 5 dargestellt.

**Tabelle 1:**

| **Ausführungsbeispiel aus organischem Lösungsmittel Petroleumbenzin (Siedebereich 60 bis 80°C)** | **Anteil β-Ketocarbonyl-funktionelle Organosiliciumverbindung aus Synthesebeispiel 1** | **Anteil gemischt Hydroxy-/Methoxy-terminiertes Copolymer aus (2-Aminoethyl-3-aminopropyl) methylsiloxy- und Dimethylsiloxyeinheiten der Viskosität von 3552 mm2/s (25°C) und einer Aminzahl von 0,14 mmol/g** | **Anteil Butyltitanat** *(>98% Butyltitanat (IV), erhältlich von der Fa. Dorf Ketal unter der Bezeichnung TYZOR® TnBT)* | **Aussehen Mischung** | **Spray-Test** | **Spray-Test gewaschen** |
|---|---|---|---|---|---|---|
| **1 (erfindungsgemäß)** | 8,7 g in ca. 100 ml Petroleumbenzin vorgelöst | 5,3 g in ca. 100 ml Petroleumbenzin vorgelöst | --- | Klar homogen | 90 | 80 |
| **2 (erfindungsgemäß)** | 8,7 g in ca. 100 ml Petroleumbenzin vorgelöst | 5,3 g in ca. 100 ml Petroleumbenzin vorgelöst | 1,0 g in ca. 100 ml Petroleumbenzin vorgelöst | Klar homogen | 100 | 100 |

Tabelle 2:

| Ausführungsbeispiel aus wässriger Dispersion | Anteil aus β-Keto-Silicon-Dispersionsbeispiel | Anteil aus AminoSilicon-Dispersionsbeispiel | Anteil Zirkonacetat (wässrige Lösung mit 22% $ZrO_2$) | Aussehen Mischung | Spray-Test | Spray-Test gewaschen |
|---|---|---|---|---|---|---|
| **3 (erfindungsgemäß)** | 25 g Nr.1 | 15 g Nr.7 | 5 g | Milchig homogen | 100 | 100 |
| **4 (erfindungsgemäß)** | 21 g Nr.1 | 19 g Nr.8 | 5 g | Milchig homogen | 100 | 100 |
| **5 (erfindungsgemäß)** | 23 g Nr.1 | 17 g Nr.9 | --- | Milchig homogen | 90 | 80 |
| **6 (erfindungsgemäß)** | 23 g Nr.1 | 17 g Nr.9 | 5 g | Milchig homogen | 100 | 90 |
| **7 (erfindungsgemäß)** | 13 g Nr.2 | 27 g Nr.7 | 5 g | Milchig homogen | 100 | 90 |
| **8 (erfindungsgemäß)** | 16 g Nr.2 | 24 g Nr.8 | 5 g | Milchig homogen | 100 | 90 |
| **9 (erfindungsgemäß)** | 29 g Nr.2 | 11 g Nr.9 | 5 g | Milchig homogen | 100 | 90 |
| **10 (erfindungsgemäß)** | 6 g Nr. 3 | 34 g Nr.7 | 5 g | Milchig homogen | 100 | 90 |
| **11 (erfindungsgemäß)** | 14 g Nr.4 | 36 g Nr.7 | 5 g | Milchig homogen | 100 | 90 |
| **12 (erfindungsgemäß)** | 39 g Nr.5 | 1 g Nr.7 | 5 g | Milchig homogen | 100 | 80 |
| **13 (erfindungsgemäß)** | 40 g Nr.10 | | 5 g | Milchig homogen | 100 | 90 |
| **14 (erfindungsgemäß)** | 40 g Nr.11 | | 5 g | Milchig homogen | 100 | 90 |
| **15 (erfindungsgemäß)** | 45 g Nr.12 | | | Milchig homogen | 100 | 90 |

**Tabelle 3:**

| Vergleichsbeispiel aus wässriger Dispersion | Anteil aus β-Keto-Silicon-Dispersionsbeispiel | Anteil aus Amino-Silicon-Dispersionsbeispiel | Anteil Zirkonacetat (wässrige Lösung mit 22% $ZrO_2$) | Aussehen Mischung | Spray-Test | Spray-Test gewaschen |
|---|---|---|---|---|---|---|
| **16 (nicht erfindungsgemäß)** | 40 g Nr.1 | --- | 5 g | Nicht stabil | --- | --- |
| **17 (nicht erfindungsgemäß)** | 40 g Nr.2 | --- | 5 g | Nicht stabil | --- | --- |
| **18 (nicht erfindungsgemäß)** | --- | 40 g Nr.7 | 5 g | Milchig homogen | 70 | 50 |
| **19 (nicht erfindungsgemäß)** | --- | 40 g Nr.8 | 5 g | Milchig homogen | 70 | 50 |
| **20 (nicht erfindungsgemäß)** | 40 g Nr.1 | - | --- | Milchig homogen | 50 | 0 |

**Tabelle 4:**

| VergleichsBeispiel aus wässriger Dispersion in Kombination mit organischem Polyamin anstelle Aminosilicon | Anteil aus β-Keto-Silicon-Dispersionsbeispiel | Anteil Polyvinylaminlösung 6%-ig in Wasser (M~340,000 g/mol); Handelsname: Lupamin 9095 von Fa. BASF | Anteil Zirkonacetat (wässrige Lösung mit 22% $ZrO_2$) | Aussehen Mischung | Spray-Test | Spray-Test gewaschen |
|---|---|---|---|---|---|---|
| **21 (nicht erfindungsgemäß)** | 39 g **Nr.1** | 1 g | 5 g | Nicht stabil | **---** | **---** |
| **22 (nicht erfindungsgemäß)** | 39 g Nr.1 | 1 g | --- | Milchig homogen | 70 | 50 |

**Tabelle 5:**

| Ausführungs- bzw. Vergleichsbeispiel aus wässriger Dispersion mit diketenbasierendem β-Keto-Silicon | Anteil Aus β-Keto-Dispersionsbeispiel | Anteil Aus Amino-Dispersionsbeispiel | Anteil Zirkonacetat (wässrige Lösung mit 22% $ZrO_2$) | Aussehen Mischung | Spray-Test | Spray-Test gewaschen |
|---|---|---|---|---|---|---|
| **23 (erfindungsgemäß)** | 24 g Nr.6 | 16 g Nr.7 | 5 g | Milchig homogen | 100 | 80 |
| **24 (nicht erfindungsgemäß)** | 40 g Nr.6 | --- | 5 g | Nicht stabil | --- | --- |
| **25 (nicht erfindungsgemäß)** | 40 g Nr.6 | --- | --- | Milchig homogen | 50 | 0 |

Aus den Ausführungsbeispielen geht klar hervor, dass nur die Kombinationen von β-Ketocarbonyl-funktionellen Organosiliciumverbindungen (1) mit aminofunktionellen Organosiliciumverbindungen (2) gute Spraytestwerte (100) aufweisen und deutlich bessere Waschfestigkeiten haben als die Einzelkomponenten für sich alleine (siehe Beispiele 3 bis 15 in Tabelle 2 im Unterscheid zu Vergleichsbeispielen 16 bis 20 in Tabelle 3).

Dispersionen aus β-Ketocarbonyl-funktionellen Organosiliciumverbindungen (1) werden instabil, wenn sie für sich alleine mit Zirkonacetat kombiniert werden (siehe Vergleichsbeispiele 16 und 17 in Tabelle 3). In diesen Fällen kommt es zu Silicon-Ausfällungen.

Es war daher überraschend, dass die erfindungsgemäße DreierKombination aus β-Ketocarbonyl-funktioneller Organosiliciumverbindung (1), aminofunktioneller Organosiliciumverbindung (2) und Organometallverbindung (3) stabil bleibt (Beispiele 1 bis 15 in Tabelle 1 und 2), während die nicht erfindungsgemäße Zweier-Kombination aus β-Ketocarbonyl-funktioneller Organosiliciumverbindung (1) und Organometallverbindung (3) (Vergleichsbeispiele 16 und 17 in Tabelle 3) sowie die nicht erfindungsgemäße Dreierkombination aus β-Ketocarbonyl-Eunktioneller Organosiliciumverbindung (1), organischem Polyamin und Organometallverbindung (3) (Vergleichsbeispiele 21 und 22 in Tabelle 4) jeweils zu Ausfällungen führen (siehe Tabelle 3 und 4).

Sämtliche nach den Vorgaben der Ausführungsbeispiele ausgerüsteten Textilien zeigen einen angenehmen Weichgriff.

## Patentansprüche

**1.** Zusammensetzung enthaltend

(1) β-Ketocarbonyl-funktionelle Organosiliciumverbindungen, die mindestens einen Si-gebundenen Rest **A** der allgemeinen Formel

$$(Si)\text{-}L^1\text{-}[X^1\text{-}L^2\text{-}]_yX^2 \qquad (I)$$

enthalten, wobei

$L^1$ einen zweiwertigen, Si-C-gebundenen Kohlenwasserstoffrest mit 1 bis 18 C-Atomen bedeutet,
$L^2$ einen zweiwertigen Kohlenwasserstoffrest mit 1 bis 6 C-Atomen bedeutet,
$X^1$ ein Rest der Formel -NZ- bedeutet,
$X^2$ ein Rest der Formel -NH-Z bedeutet,
Z ein Rest der Formel $-C(=O)-CHR^3-C(=O)-CH_2R^3$ bedeutet,
$R^3$ einen einwertigen, gegebenenfalls substituierten Kohlenwasserstoffrest mit mindestens 12 C-Atomen, vorzugsweise mit mindestens 14 C-Atome bedeutet,
y 0, 1, 2 oder 3, vorzugsweise 0 oder 1, besonders bevorzugt 0, ist und (Si)- die Bindung zum Si-Atom bedeutet,

(2) aminofunktionelle Organosiliciumverbindung mit mindestens einem Si-gebunden Rest **B** der allgemeinen Formel

$$(Si)\text{-}P^1\text{-}[Y^1\text{-}P^2\text{-}]_zY^2 \qquad (II),$$

wobei

$P^1$ und $P^2$ dieselbe Bedeutung wie $L^1$ und $L^2$ haben,
$Y^1$ ein Rest der Formel -NH- oder $-NR^4-$ ist,
$Y^2$ ein Rest der Formel $NH_2$ oder $NHR^4$ ist,
$R^4$ dieselbe Bedeutung wie $R^2$ hat,
z 0, 1, 2 oder 3, vorzugsweise 0 oder 1, besonders bevorzugt 1, ist und (Si)- die Bindung zum Si-Atom bedeutet,

und gegebenenfalls
(3) Organometallverbindungen.

**2.** Zusammensetzung nach Anspruch 1, **dadurch gekennzeichnet, dass** als β-Ketocarbonyl-funktionelle Organosiliciumverbindungen (1) Organopolysiloxane der allgemeinen Formel

$$A_gR^*_{3-g}SiO(SiR_2O)_l(SiRAO)_kSiR^*_{3-h}A_h \quad (IV),$$

eingesetzt werden, wobei

A ein Rest der Formel (I) gemäß Anspruch 1 ist,
R* gleich oder verschieden ist und einen Rest R oder einen Rest der Formel $-OR^1$ bedeutet, wobei
R einen einwertigen, gegebenenfalls substituierten Kohlenwasserstoffrest mit 1 bis 18 C-Atomen je Rest bedeutet,
$R^1$ ein Wasserstoffatom oder einen Alkylrest mit 1 bis 8 C-Atomen bedeutet,
g 0 oder 1,
h 0 oder 1,
l 0 oder eine ganze Zahl von 1 bis 2000 und
k 0 oder eine ganze Zahl von 1 bis 20 ist,

mit der Maßgabe, dass durchschnittlich mindestens ein Rest **A** je Molekül enthalten ist.

**3.** Zusammensetzung nach Anspruch 1 oder 2, **dadurch gekennzeichnet, dass** als aminofunktionelle Organosiliciumverbindungen (2) Organopolysiloxane bestehend aus Einheiten der allgemeinen Formel

$$B_dR'_e(OR^5)_fSiO_{\frac{4-(d+e+f)}{2}} \quad (V)$$

eingesetzt werden, wobei

B ein Rest der Formel (II) gemäß Anspruch 1 ist,
R' einen einwertigen, gegebenenfalls substituierten Kohlenwasserstoffrest mit 1 bis 18 C-Atomen je Rest bedeutet,
$R^5$ ein Wasserstoffatom oder einen Alkylrest mit 1 bis 8 C-Atomen bedeutet,
d 0 oder 1
e 0, 1, 2 oder 3 und
f 0 oder 1 ist,

mit der Maßgabe, dass die Summe d+e+f kleiner oder gleich 3 ist und durchschnittlich mindestens ein Rest **B** je Molekül enthalten ist.

**4.** Zusammensetzungen nach Anspruch 1, 2 oder 3, **dadurch gekennzeichnet, dass** als aminofunktionelle Organosiliciumverbindung (2) Organopolysiloxane der allgemeinen Formel

$$B_sR^6_{3-s}SiO(SiR'_2O)_n(SiR'BO)_mSiR^6_{3-t}B_t \quad (VI),$$

eingesetzt werden, wobei

B ein Rest der Formel (II) gemäß Anspruch 1 ist,
$R^6$ gleich oder verschieden ist und einen Rest R' oder einen Rest der allgemeinen Formel $-OR^5$ bedeutet, wobei
R' einen einwertigen, gegebenenfalls substituierten Kohlenwasserstoffrest mit 1 bis 18 C-Atomen je Rest bedeutet,
$R^5$ ein Wasserstoffatom oder einen Alkylrest mit 1 bis 8 C-Atomen bedeutet,
s 0 oder 1,
t 0 oder 1,
n 0 oder eine ganze Zahl von 1 bis 2000 und
m 0 oder eine ganze Zahl von 1 bis 20 ist,

mit der Maßgabe, dass durchschnittlich mindestens ein Rest **B** je Molekül enthalten ist.

**5.** Zusammensetzungen nach einem der Ansprüche 1 bis 4, **dadurch gekennzeichnet, dass** als Organometallverbindungen (3) Amine, Alkoholate, carbon- oder phosphorsaure Salze oder Chelate von Metallen ausgewählt aus

der Gruppe von Pb, Zn, Zr, Sb, Fe, Cd, Sn, Ti, Ba, Ca, Mn, V, Al und Co eingesetzt werden.

6. Zusammensetzungen nach einem der Ansprüche 1 bis 5, **dadurch gekennzeichnet, dass** als Organometallverbindungen (3) Alkoholate oder carbonsaure Salze von Titan oder Zirkon, vorzugsweise Butyltitanat, Zirkonoctoat oder Zirkonacetat, eingesetzt werden.

7. Zusammensetzungen nach einem der Ansprüche 1 bis 6, **dadurch gekennzeichnet, dass** sie wässrige Dispersionen sind, enthaltend

(1) β-Ketocarbonyl-funktionelle Organosiliciumverbindungen mit mindestens einem Si-gebundenen Rest der Formel (I),
(2) aminofunktionelle Organosiliciumverbindungen mit mindestens einem Si-gebundenen Rest der Formel (II), gegebenenfalls
(3) Organometallverbindungen,
(4) Emulgatoren und
(5) Wasser.

8. Zusammensetzungen nach Anspruch 7, **dadurch gekennzeichnet, dass** als β-Ketocarbonyl-funktionelle Organosiliciumverbindungen (1) Organopolysiloxane der Formel (IV) gemäß Anspruch 2 eingesetzt werden.

9. Zusammensetzungen nach Anspruch 7 oder 8, **dadurch gekennzeichnet, dass** als aminofunktionelle Organosiliciumverbindungen (2) aminofunktionelle Organopolysiloxane bestehend aus Einheiten der Formel (V) gemäß Anspruch 3 oder aminofunktionelle Organopolysiloxane der Formel (VI) gemäß Anspruch 4 eingesetzt werden.

10. Zusammensetzungen nach Anspruch 7, 8 oder 9, **dadurch gekennzeichnet, dass** als Emulgatoren (4) nicht-ionische Emulgatoren oder Mischungen aus nicht-ionischen und anionischen Emulgatoren eingesetzt werden.

11. Verfahren zur Herstellung der wässrigen Dispersionen nach einem der Ansprüche 7 bis 10 durch Vermischen von

(1) β-Ketocarbonyl-funktionelle Organosiliciumverbindungen mit mindestens einem Si-gebundenen Rest der Formel (I),
(2) aminofunktionelle Organosiliciumverbindungen mit mindestens einem Si-gebundenen Rest der Formel (II), gegebenenfalls
(3) Organometallverbindungen,
(4) Emulgatoren und
(5) Wasser.

12. Verfahren zur Ausrüstung von faserigen Substraten, vorzugsweise Textilien, mit Zusammensetzungen nach einem der Ansprüche 1 bis 10 oder hergestellt nach Anspruch 11.

13. Verfahren nach Anspruch 12, **dadurch gekennzeichnet, dass** die Zusammensetzungen nach einem der Ansprüche 1 bis 10 oder hergestellt nach Anspruch 11 auf die faserigen Substrate aufgetragen und anschließend die behandelten faserigen Substrate trocknen gelassen werden.

14. Verfahren zur Imprägnierung von faserigen Substraten, vorzugsweise Textilien, mit Zusammensetzungen nach einem der Ansprüche 1 bis 10 oder hergestellt nach Anspruch 11, wobei die Zusammensetzungen nach einem der Ansprüche 1 bis 10 oder hergestellt nach Anspruch 11 auf die faserigen Substrate aufgetragen und anschließend die behandelten faserigen Substrate trocknen gelassen werden.

## Claims

1. Composition comprising

(1) β-ketocarbonyl-functional organosilicon compounds which comprise at least one Si-bonded radical **A** of the general formula

$$(Si)\text{-}L^1\text{-}[X^1\text{-}L^2\text{-}]_yX^2 \qquad (I)$$

where

$L^1$ is a divalent, Si-C-bonded hydrocarbon radical having 1 to 18 carbon atoms,
$L^2$ is a divalent hydrocarbon radical having 1 to 6 carbon atoms,
$X^1$ is a radical of the formula -NZ-,
$X^2$ is a radical of the formula -NH-Z,
Z is a radical of the formula $-C(=O)-CHR^3-C(=O)-CH_2R^3$,
$R^3$ is a monovalent, optionally substituted hydrocarbon radical having at least 12 carbon atoms, preferably having at least 14 carbon atoms,
y is 0, 1, 2 or 3, preferably 0 or 1, more preferably 0, and (Si)- is the bond to the Si atom,

(2) amino-functional organosilicon compound having at least one Si-bonded radical **B** of the general formula

$$(Si)-P^1-[Y^1-P^2-]_zY^2 \qquad (II),$$

where

$P^1$ and $P^2$ have the same definition as $L^1$ and $L^2$,
$Y^1$ is a radical of the formula -NH- or $-NR^4-$,
$Y^2$ is a radical of the formula $NH_2$ or $NHR^4$,
$R^4$ has the same definition as $R^2$,
z is 0, 1, 2 or 3, preferably 0 or 1, more preferably 1, and (Si)- is the bond to the Si atom,

and optionally
(3) organometallic compounds.

2. Composition according to Claim 1, **characterized in that** β-ketocarbonyl-functional organosilicon compounds (1) used comprise organopolysiloxanes of the general formula

$$A_gR^*_{3-g}SiO(SiR_2O)_l(SiRAO)_kSiR^*_{3-h}A_h \qquad (IV),$$

where

A is a radical of the formula (I) according to Claim 1,
R* is identical or different and is a radical R or a radical of the formula $-OR^1$, where
R is a monovalent, optionally substituted hydrocarbon radical having 1 to 18 carbon atoms per radical,
$R^1$ is a hydrogen atom or an alkyl radical having 1 to 8 carbon atoms,
g is 0 or 1,
h is 0 or 1,
l is 0 or an integer from 1 to 2000, and
k is 0 or an integer from 1 to 20,

with the proviso that there is on average at least one radical **A** per molecule.

3. Composition according to Claim 1 or 2, **characterized in that** amino-functional organosilicon compounds (2) used comprise organopolysiloxanes consisting of units of the general formula

$$B_dR'_e(OR^5)_fSiO_{\frac{4-(d+e+f)}{2}} \qquad (V)$$

where

B is a radical of the formula (II) according to Claim 1,
R' is a monovalent, optionally substituted hydrocarbon radical having 1 to 18 carbon atoms per radical,
$R^5$ is a hydrogen atom or an alkyl radical having 1 to 8 carbon atoms,
d is 0 or 1

e is 0, 1, 2 or 3, and
f is 0 or 1,

with the proviso that the sum d+e+f is not more than 3 and there is on average at least one radical **B** per molecule.

4. Compositions according to Claim 1, 2 or 3, **characterized in that** amino-functional organosilicon compound (2) used comprises organopolysiloxanes of the general formula

$$B_sR^6_{3-s}SiO(SiR'_2O)_n(SiR'BO)_mSiR^6_{3-t}B_t \qquad (VI),$$

where

B is a radical of the formula (II) according to Claim 1,
$R^6$ is identical or different and is a radical R' or a radical of the general formula $-OR^5$, where
R' is a monovalent, optionally substituted hydrocarbon atom having 1 to 18 carbon atoms per radical,
$R^5$ is a hydrogen atom or an alkyl radical having 1 to 8 carbon atoms,
s is 0 or 1,
t is 0 or 1,
n is 0 or an integer from 1 to 2000, and
m is 0 or an integer from 1 to 20,

with the proviso there is on average at least one radical **B** per molecule.

5. Compositions according to any of Claims 1 to 4, **characterized in that** organometallic compounds (3) used comprise amines, alkoxides, carboxylic or phosphoric acid salts or chelates of metals selected from the group of Pb, Zn, Zr, Sb, Fe, Cd, Sn, Ti, Ba, Ca, Mn, V, Al, and Co.

6. Compositions according to any of Claims 1 to 5, **characterized in that** organometallic compounds (3) used comprise alkoxides or carboxylic acid salts of titanium or zirconium, preferably butyl titanate, zirconium octoate or zirconium acetate.

7. Compositions according to any of Claims 1 to 6, **characterized in that** they are aqueous dispersions comprising

(1) β-ketocarbonyl-functional organosilicon compounds having at least one Si-bonded radical of the formula (I),
(2) amino-functional organosilicon compounds having at least one Si-bonded radical of the formula (II), optionally
(3) organometallic compounds,
(4) emulsifiers, and
(5) water.

8. Compositions according to Claim 7, **characterized in that** β-ketocarbonyl-functional organosilicon compounds (1) used comprise organopolysiloxanes of the formula (IV) according to Claim 2.

9. Compositions according to Claim 7 or 8, **characterized in that** amino-functional organosilicon compounds (2) used comprise amino-functional organopolysiloxanes consisting of units of the formula (V) according to Claim 3, or amino-functional organopolysiloxanes of the formula (VI) according to Claim 4.

10. Compositions according to Claim 7, 8 or 9, **characterized in that** emulsifiers (4) used comprise nonionic emulsifiers or mixtures of nonionic and anionic emulsifiers.

11. Method for producing the aqueous dispersions as claimed in any of Claims 7 to 10, by mixing

(1) β-ketocarbonyl-functional organosilicon compounds having at least one Si-bonded radical of the formula (I),
(2) amino-functional organosilicon compounds having at least one Si-bonded radical of the formula (II), optionally
(3) organometallic compounds,
(4) emulsifiers, and
(5) water.

**12.** Method for finishing fibrous substrates, preferably textiles, with compositions according to any of Claims 1 to 10 or produced according to Claim 11.

**13.** Method according to Claim 12, **characterized in that** the compositions according to any of Claims 1 to 10 or produced according to Claim 11 are applied to the fibrous substrates and then the fibrous substrates treated are allowed to dry.

**14.** Method for impregnating fibrous substrates, preferably textiles, with compositions according to any of Claims 1 to 10 or produced according to Claim 11, where the compositions according to any of Claims 1 to 10 or produced according to Claim 11 are applied to the fibrous substrates and then the fibrous substrates treated are allowed to dry.

**Revendications**

**1.** Composition contenant

(1) des composés d'organosilicium fonctionnalisés par β-cétocarbonyle, qui contiennent au moins un radical A lié à Si de formule générale

$$(Si)\text{-}L^1\text{-}[X^1\text{-}L^2\text{-}]_yX^2 \qquad (I),$$

$L^1$ signifiant un radical hydrocarboné divalent lié par Si-C comportant 1 à 18 atome(s) de C,
$L^2$ signifiant un radical hydrocarboné divalent comportant 1 à 6 atome(s) de C,
$X^1$ signifiant un radical de formule -NZ-,
$X^2$ signifiant un radical de formule -NH-Z,
Z signifiant un radical de formule $-C(=O)-CHR^3-C(=O)-CH_2R^3$,
$R^3$ signifiant un radical hydrocarboné monovalent, éventuellement substitué comportant au moins 12 atomes de C, de préférence comportant au moins 14 atomes de C, y étant 0, 1, 2 ou 3, de préférence 0 ou 1, particulièrement préférablement 0, et

(2) un composé d'organosilicium fonctionnalisé par amino comportant au moins un radical B lié à Si de formule générale

$$(Si)\text{-}P^1\text{-}[Y^1\text{-}P^2\text{-}]_zY^2 \qquad (II),$$

$P^1$ et $P^2$ possédant la même signification que $L^1$ et $L^2$,
$Y^1$ étant un radical de formule -NH- ou $-NR^4-$,
$Y^2$ étant un radical de formule $NH_2$ ou $NHR^4$,
$R^4$ possédant la même signification que $R^2$,
z étant 0, 1, 2 ou 3, de préférence 0 ou 1, particulièrement préférablement 0, et
(Si)- signifiant la liaison à l'atome de Si, éventuellement

(3) des composés organométalliques.

**2.** Composition selon la revendication 1, **caractérisée en ce qu'**en tant que composés d'organosilicium fonctionnalisés par β-cétocarbonyle (1), des organopolysiloxanes de formule générale

$$A_gR^*_{3-g}SiO(SiR_2O)_1(SiRAO)_kSiR^*_{3-h}A_h \qquad (IV),$$

sont utilisés,

A étant un radical de formule (I) selon la revendication 1,
R* étant identique ou différent et signifiant un radical R ou un radical de formule $-OR^1$,
R signifiant un radical hydrocarboné monovalent, éventuellement substitué comportant 1 à 18 atome(s) de C par radical,
$R^1$ signifiant un atome d'hydrogène ou un radical alkyle comportant 1 à 8 atome(s) de C,
g étant 0 ou 1,

h étant 0 ou 1,
l étant 0 ou un nombre entier de 1 à 2000 et
k étant 0 ou un nombre entier de 1 à 20,

étant entendu qu'en moyenne au moins un radical A est contenu par molécule.

3. Composition selon la revendication 1 ou 2, **caractérisée en ce qu'**en tant que composés d'organosilicium fonctionnalisés par amino (2), des organopolysiloxanes constitués de motifs de formule générale

$$B_dR'_e(OR^5)_fSiO_{\frac{4-(d+e+f)}{2}} \quad (V)$$

sont utilisés,

B étant un radical de formule (II) selon la revendication 1,
R' signifiant un radical hydrocarboné monovalent, éventuellement substitué comportant 1 à 18 atome(s) de C par radical,
$R^5$ signifiant un atome d'hydrogène ou un radical alkyle comportant 1 à 8 atome(s) de C,
d étant 0 ou 1
e étant 0, 1, 2 ou 3 et
f étant 0 ou 1,

étant entendu que la somme d + e + f est inférieure ou égale à 3 et qu'en moyenne au moins un radical B est contenu par molécule.

4. Compositions selon la revendication 1, 2 ou 3, **caractérisées en ce qu'**en tant que composé d'organosilicium fonctionnalisé par amino (2), des organopolysiloxanes de formule générale

$$B_sR^6_{3-s}SiO(SiR'_2O)_n(SiR'BO)_mSiR^6_{3-t}B_t \quad (VI),$$

sont utilisés,

B étant un radical de formule (II) selon la revendication 1,
$R^6$ étant identique ou différent et signifiant un radical R' ou un radical de formule générale $-OR^5$,
R' signifiant un radical hydrocarboné monovalent, éventuellement substitué comportant 1 à 18 atome(s) de C par radical,
$R^5$ signifiant un atome d'hydrogène ou un radical alkyle comportant 1 à 8 atome(s) de C,
s étant 0 ou 1,
t étant 0 ou 1,
n étant 0 ou un nombre entier de 1 à 2000 et
m étant 0 ou un nombre entier de 1 à 20,

étant entendu qu'en moyenne au moins un radical B est contenu par molécule.

5. Compositions selon l'une quelconque des revendications 1 à 4, **caractérisées en ce qu'**en tant que composés organométalliques (3), des sels d'amines, d'alcoolates, d'acides carboxyliques ou d'acides phosphoriques ou des chélates de métaux choisis dans le groupe constitué par Pb, Zn, Zr, Sb, Fe, Cd, Sn, Ti, Ba, Ca, Mn, V, Al et Co sont utilisés.

6. Compositions selon l'une quelconque des revendications 1 à 5, **caractérisées en ce qu'**en tant que composés organométalliques (3) des sels d'alcoolates ou d'acides carboxyliques de titane ou de zirconium sont utilisés, de préférence le titanate de butyle, l'octoate de zirconium ou l'acétate de zirconium.

7. Compositions selon l'une quelconque des revendications 1 à 6, **caractérisées en ce que** ce sont des dispersions aqueuses, contenant

(1) des composés d'organosilicium fonctionnalisés par β-cétocarbonyle comportant au moins un radical lié à Si de formule (I),
(2) des composés d'organosilicium fonctionnalisés par amino comportant au moins un radical lié à Si de formule (II),
éventuellement
(3) des composés organométalliques,
(4) des émulsifiants et
(5) de l'eau.

**8.** Compositions selon la revendication 7, **caractérisées en ce qu'**en tant que composés d'organosilicium fonctionnalisés par β-cétocarbonyle (1), des organopolysiloxanes de formule (IV) selon la revendication 2 sont utilisés.

**9.** Compositions selon la revendication 7 ou 8, **caractérisées en ce qu'**en tant que composés d'organosilicium fonctionnalisés par amino (2), des organopolysiloxanes fonctionnalisés par amino constitués de motifs de formule (V) selon la revendication 3 ou des organopolysiloxanes fonctionnalisés par amino de formule (VI) selon la revendication 4 sont utilisés.

**10.** Compositions selon la revendication 7, 8 ou 9, **caractérisées en ce qu'**en tant qu'émulsifiants (4), des émulsifiants non ioniques ou des mélanges d'émulsifiants non ioniques et anioniques sont utilisés.

**11.** Procédé pour la préparation des dispersions aqueuses selon l'une quelconque des revendications 7 à 10 par le mélange

(1) de composés d'organosilicium fonctionnalisés par β-cétocarbonyle comportant au moins un radical lié à Si de formule (I),
(2) de composés d'organosilicium fonctionnalisés par amino comportant au moins un radical lié à Si de formule (II),
d'éventuellement
(3) des composés organométalliques,
(4) d'émulsifiants et
(5) d'eau.

**12.** Procédé pour l'apprêtage de substrats fibreux, de préférence de textiles, avec des compositions selon l'une quelconque des revendications 1 à 10 ou préparées selon la revendication 11.

**13.** Procédé selon la revendication 12, **caractérisé en ce que** les compositions selon l'une quelconque des revendications 1 à 10 ou préparées selon la revendication 11 sont appliquées sur les substrats fibreux et ultérieurement les substrats fibreux traités sont laissés à sécher.

**14.** Procédé pour l'imprégnation de substrats fibreux, de préférence de textiles, avec des compositions selon l'une quelconque des revendications 1 à 10 ou préparées selon la revendication 11, les compositions selon l'une quelconque des revendications 1 à 10 ou préparées selon la revendication 11 étant appliquées sur les substrats fibreux et ultérieurement les substrats fibreux traités sont laissés à sécher.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2854424 A
- GB 884141 A
- US 20110015332 A1
- WO 2014184097 A1
- WO 2016042085 A1
- WO 2016026737 A1
- US 20110024679 A1
- US 20090197081 A1
- US 20090144912 A1
- US 6121404 B
- US 20080293907 A1
- US 20050215806 A1
- US 20020049296 A1
- US 20150112092 A1


### In der Beschreibung aufgeführte Nicht-Patentliteratur


- **BUCH.** Chemistry and Technology of Silicones. 1968, 447-452
- **CHARLES TOMASINO.** Chemistry & Technology of Fabric Preparation & Finishing. 1992, 154-171
- *Journal of Colloid and Interface Science,* 2006, vol. 298, 441-450
- Der HLB-Wert kann für nichtionische Tenside nach Hans-Dieter Dörfler, Grenzflächen- und Kolloidchemie. VCH, 1994, 198